# EUROPEAN PATENT SPECIFICATION

(11) **EP 3 307 610 B1**
(45) Date of publication and mention of the grant of the patent: **28.07.2021**
(21) Application number: 16729220.0
(22) Date of filing: 03.06.2016
(51) Int. Cl.: B62H 5/06

(54) **LOCKING ARRANGEMENT FOR SECURING A WHEELED VEHICLE AGAINST THEFT AND METHOD OF USING THE LOCKING ARRANGEMENT**
ANORDNUNG UND VERFAHREN ZUR SICHERUNG EINES RADFAHRZEUGS GEGEN DIEBSTAHL
AGENCEMENT ET PROCÉDÉ DE SÉCURISATION D'UN VÉHICULE À ROUES CONTRE LE VOL

(30) Priority: 11.06.2015 EP 15171604; 19.05.2016 DK 201670334
(43) Date of publication of application: 18.04.2018
(73) Proprietor: HNC Switzerland GmbH, 8200 Schaffhausen (CH)
(72) Inventor: LINDVED, Per, 2625 Vallensbæk (DK)
(74) Representative: Holme Patent A/S
(86) International application number: PCT/EP2016/062687
(87) International publication number: WO 2016/198340

(56) References cited:
- EP-B1- 0 808 268
- CH-A- 209 487
- CN-U- 202 953 076
- DE-A1-102014 108 891
- GB-A- 815 456
- GB-A- 889 527
- GB-A- 2 274 438
- JP-A- 2006 088 745

## Description

The present invention relates to an anti-theft locking arrangement for a vehicle having at least two wheels according to appended claim 1.

The present invention relates to a locking arrangement for securing a vehicle having a least two wheels against being stolen. The vehicle is in the non-riding mode when the locking pin engages an associated adjusting means and/or locking means or, and in the riding mode when the locking pin does not engage the adjusting means and/or locking means.

The present invention relates in particular to anti-theft locking arrangements for bicycles.

British patent application no. GB889527 relates to a device for locking the front wheel fork of a bicycle to the steering head to prevent relative rotation of those parts. This known locking arrangement has teeth in an arcuated recess, wherein the teeth are adapted for engagement of a notched end portion of a locking pin that is projected through or against a face of the mounting plate.

An almost similar device is known from British patent application no. GB815456 which discloses the features of the preamble of claim 1, and which describes a bicycle fork lock acting by angularly locking the steering column of the bicycle relatively to the frame. An arcuate row of teeth are exposed from a locking plate to engage a locking pin. Both the teeth and the end portion of the locking pin is exposed for tampering.

An anti-theft locking arrangement for a bicycle is known from the International Patent Application no. WO 96/26102 of the present inventor.

For this known anti-theft locking arrangement the upper and lower mounting parts are locked together simply by displacing the locking pin from its upper position to its lower position in which the locking pin engages bores formed in both mounting parts. The locking pin then becomes exposed through the lower mounting part so that a thief can deliberately and intentionally knock up the locking pin free of at least the bore of the lower mounting part from below to unlock an already locked bicycle, where after the front wheel can be turned unobstructed away from the plane of the rear wheel(s) by using the handlebars. This solution has been satisfactory to some extent and without alternatives because it has hitherto been believed that without having the locking pin to pass the whole way through both mounting parts, interlocking would not be sufficiently strong.

These and other disadvantages of the prior art safeguarding by using locking arrangements that prevent steering a wheeled vehicle, such as a bicycle, are according to the invention remedied by,
in a first aspect of the invention providing an anti-theft locking arrangement of the kind mentioned in the opening paragraph which provides greater safety against stealing a two-wheeled vehicle, such as a bicycle, than hitherto known,
in a second aspect of the invention providing an anti-theft locking arrangement of the kind mentioned in the opening paragraph which provides great safety against being broken up,
in a third aspect of the invention providing an anti-theft locking arrangement of the kind mentioned in the opening paragraph by means of which it is comfortable, fast, and easy to lock a wheeled vehicle, such as e.g. a bicycle,
in a fourth aspect of the invention providing an anti-theft locking arrangement of the kind mentioned in the opening paragraph which is specifically adapted for being attached to a wheeled vehicle in relation to the head tube and steerer tube of the front fork of the wheeled vehicle without obstructing the turnability of the steerer tube, and thus of the front wheel away from the plane of the rear wheel(s), when the locking arrangement is not locked,
in a fifth aspect of the invention providing an anti-theft locking arrangement of the kind mentioned in the opening paragraph which can be mounted on a conventional wheeled vehichle without damaging any parts of the vehicle, in particular not damaging or being invasive on any of the frame or the steerer tube or the front fork in order to be fitted to the vehicle,
in a sixth aspect of the invention providing an anti-theft locking arrangement of the kind mentioned in the opening paragraph which can be fitted on an existing vehicle, such as on a bicycle,
in a seventh aspect of the invention providing an anti-theft locking arrangement of the kind mentioned in the opening paragraph that locks the position of the front wheel of a vehicle in fixed position in relation to the frame in the parked position of the vehicle,
in an eight aspect of the invention providing an anti-theft locking arrangement of the kind mentioned in the opening paragraph that can be mounted to a vehicle without disfiguring the vehicle.

The novel and unique features whereby these and other aspects are achieved according to the present invention consist in an anti-theft locking arrangement for a vehicle having at least two wheels, said locking arrangement comprises,
- an upper mounting part including an upper mounting plate and a lock housing,
   - the upper mounting plate includes
   - an upper vehicle mounting component that serves for securing said upper mounting plate to a head tube of a frame of the vehicle, which upper vehicle mounting component has an upper through-hole, and
   - an upper locking plate part protruding from the upper vehicle mounting component,
   - the lock housing has a bore that accommodates a cylinder lock,
- a lower mounting part including a lower mounting plate, the lower mounting plate includes
   - a lower vehicle mounting component that has a lower through-hole for receiving a steerer tube of a front fork of the vehicle, which steerer tube defines an upright axle turnable arranged in the head tube of the frame of the vehicle, and
   - a lower locking plate part protruding from the lower vehicle mounting component,
- the lower mounting part turns together with the turnable steerer tube when the handlebars is turned,
- a locking pin is situated at a bottom face of the cylinder lock and being adapted to engage at least the upper mounting plate,
   the upper through-hole and the lower through-hole (9a;41a) are arranged co-axially so that the lower locking plate part is arranged turnable subjacent the upper locking plate part to form a guard below the locking pin, wherein
- the lock housing is solid with the upper mounting plate,

and wherein
- locking and unlocking of the anti-theft locking arrangement is achieved by the provision of a lock plate component confined slidingly in a lock plate compartment delimited between the upper locking plate part and the lock housing,
- the lock plate component is actuable to slide between engagement and disengagement with at least the row of first teeth of the lower mounting part by means of an eccentrically placed locking pin at the bottom face of the cylinder lock in response to turning the cylinder lock in the lock housing,wherein
- the free compartment edge of the lock plate compartment has a row of third teeth alignable for engaging the row of second teeth of the end stop of the lock plate component, and
- in the the parked position at least some of the teeth of the row of first teeth and some of the teeth of the row of third teeth are arranged in alignment to define a common gap having a combined height corresponding to the height of the aligned row of second teeth to allow entry of and engagement with the row of second teeth of the end stop as an anti-rotation means.

In the context of the present invention a "vehicle having a least two wheels" means any vehicle, motorised or not, having a front wheel and at least one rear wheel, and a head tube of a frame.

An exemplary preferred vehicle is a human-powered, an electrically powered, an engine powered or pedal-driven vehicle having two wheels attached to a frame, one behind the other. The steerer tube of the front fork and the stem of the handlebars of such a vehicle is turnable by turning the handlebars in relation to the head tube, - sometimes called the head tube-, which also allows said front fork to turn the front wheel away from the plane of the rear wheel (s) smoothly for steering and good balance.

The vehicle of the invention is not limited to a conventional bicycle. Thus the locking arrangement can be mounted on any vehicle where the plane of the rotation of the front wheel can be turned away from the central plane of the frame of the vehicle, which turning often is associated with the presence of a turning facilitating means such as e.g. a ball bearing or roller bearing to reduce rotational friction. Vehicles suited for implementing the anti-theft locking arrangement according to the present invention include but is not limited to e.g. carrier cycles, Christiania cycle, E-Bikes, and vehicles having more than one rear wheel but normally just one front wheel. However the locking arrangement can be mounted with same advantageously effect to one front wheel of a vehicle having two front wheels, so long as it has a head tube.

The anti-theft locking arrangement of the present invention can be mounted to the steerer tube of the front fork and to the head tube where these tubes normally are joined confining the crown race and lower head tube race. The existing crown race and lower head tube race of the existing ball bearing that facilitates the turning operation can remain for this purpose in some embodiments. Alternatively, the anti-theft locking arrangement may include its own bearings as replacement for the crown race and lower head tube race. In some embodiment the anti-theft device of the present invention may be mounted already at the factory as a deliberate choice. In other embodiments the anti-theft device is retrofitted to the vehicle later e.g. by or the bicycle repairer.

In all embodiments the anti-theft locking arrangement serves as an "anti-turning device" to prevent turning of a front wheel of a vehicle by means of the handlebars in some positions and modes, e.g. in parked positions and modes, and allows the handlebars to turn the front wheel by means of the handlebars in other positions and modes, e.g. in a riding positions and modes.

In a non-claimed embodiment a locking pin serves the purpose of locking the upper locking plate part together with any or both of the lower locking plate part in a selected adjusted position of a front wheel of the vehicle including turned away from the plane of the rear wheel(s). Within the present invention the terms locking pin and adjusting pin may be used interchangeably.

In the locked condition the lock plate component is moved so that the end stop is close to or abuts the free compartment edge of the lock plate compartment and the row of first teeth engages the row of second teeth, which movement is a sliding displacement towards the steerer tube due to the locking pin carrying the slide leg along by its engagement with the actuation hole and the subsequent turning of the cylinder lock in the lock housing.

The lock housing is solid with the upper mounting part and turning of the lower mounting part and the upper mounting part in relation to each other is heavily blocked and obstructed, and maximum resistance against turning the steerer tube of the front fork, and thus the front wheel, is created in a locking arrangement that demonstrates superior anti-theft properties. In contrast to the above mentioned prior art lock device the free end of the non-claimed locking pin is protected by the lower mounting part from being knocked upwards or otherwise free of engagement with the overlapping parts of the mounting plates because the lower mounting plate hides the free end of the locking pin and serves as a solid guard below said locking pin. The solid guard below said free end also makes the locking pin invisible from below the lower mounting plate so that a thief is not automatically attracted to the option of knocking up the locking arrangement. So the free end of the locking pin is well protected and the non-claimed anti-theft locking arrangement discourages from theft and tampering.

Means that contributes to the interlocking action between the upper mounting part and the lower mounting part may be provided on, in or at any of the mounting plates, which contributory means to perfect interlocking in some instances are referred to as adjusting means. Thus within the scope of the present invention adjusting means are means that co-operates with the adjusting pin.

For example the lower mounting part may have adjusting means that cooperates with the locking pin of the cylinder lock in such a way that the vehicle is in the non-riding mode when the locking pin engages the adjusting means and in the riding mode when the locking pin does not engage the adjusting means. Such cooperation can conveniently take place inside the lock housing and/or be hidden between locking plate parts of the anti-theft device.

At least the upper locking plate part may have an oblong slot or hole for passage of the locking pin towards the lower locking plate part to engage said lower locking plate part.

The lock housing advantageously may comprise a lower part in form of a substantially L-shaped axial extension that defines a groove. The opening into the groove faces towards a protruding upper projection at the front end of the upper locking plate part so that this front end can be received inside the groove and be inaccessible from below by being protected by the short leg of the L-shape, and being inaccessible from above due to the presence of the lock housing. So just as the locking pin the front end of the upper locking plate part is also guarded. Advantageously, the groove of the substantially L-shaped axial extension may also receive and capture at least a protruding lower projection at the front end of the lower locking plate part, so that both front ends of the locking plate parts are guarded and cannot be tampered with.

The lower projection at the front end of the lower locking plate part may have a curved edge to follow a corresponding curvature along the bottom of the groove thereby minimizing any radial gap between the L-shaped extension and the front ends of the locking plate parts. Not only does the curvature of the edge allow for a smooth turning of the lower mounting part in relation to the upper mounting part, the selected curvature also makes it impossible to reach into the groove from the side with a straight tool, such as screw driver, in attempts to open the anti-theft lock this way.

The smooth turning of the lower mounting part in relation to the upper mounting part can be facilitated if the centre of the curve of the edge of the lower projection is situated on the axis of the upright axle constituted by the steerer tube of the front fork of the vehicle.

In a particular nice design of the anti-theft locking arrangement of the present invention a main part of the lower locking plate part may have an at least substantially uniform thickness. The same may apply for the upper locking plate part, which also may have an at least substantially uniform thickness. The distance between the respective lower locking plate and upper locking plate may preferably be selected so that the main parts of the locking plate parts are not in direct touching contact. Said distance between the respective lower locking plate and upper locking plate may e.g. be 0.5 mm. The locking pin may touch one or both locking plate parts and any adjusting means or locking means forming part of the upper and/or lower mounting parts. By avoiding direct touching contact between the locking plate parts, these plate parts can turn unobstructed in relation to each other when the rider steers the vehicle during riding.

In some instances of the anti-theft device of the present invention the cylinder lock with the locking pin at the bottom face of the cylinder lock can be arranged displaceable up and down in the lock housing for the locking pin to engage the adjusting means in the upper mounting plate and optionally also the lower mounting plate.

Within the scope of the present invention the term "cylinder lock" is used broadly to cover a conventional lock with a physical key or a lock with an remote electronically actuated key. A suitable "cylinder lock" can e.g. be a pin tumbler lock from RUKO A/S based on the principle of pins preventing the lock from being operated unless the correct key is inserted. The cylinder lock can be of other kinds including but not limited to YALE locks or ASSA locks.

Another suitable cylinder lock can e.g. be a tumbler lock associated with an electric motor that can be operated from a distance.

Customised cylinder locks are within the scope of the present invention as well. The essential issue when choosing the cylinder lock for the locking arrangement of the present invention is that a protruding locking pin can be provided at the bottom face of the cylinder lock.

Common to the cylinder locks suitable for the present invention is also that the lock housing constitutes the outmost casing for a moveable cylinder and/or for a receptacle for mounting the moveable cylinder in the lock housing. Also common is, as mentioned above, the provision of the locking pin in a fixed predetermined axially protruding position at the bottom face of the cylinder lock and having a length that allows for proper engagement with at least the upper locking plate part, and optionally in some also engaging the lower locking plate part.

Any of the locking pin and the adjusting means may have means for generating a resistance against turning the lower mounting part in relation to the upper mounting part when the locking pin and the adjusting means engage.

The adjusting means that cooperates with the locking pin can be a lower recess formed in the topside of the lower locking plate part, which topside faces towards the upper locking plate part. In this embodiment the upper and lower mounting parts can still cooperate with each other so that the lower mounting part is allowed to turn in relation to the upper mounting part. This turning takes place about the axis of the axle of the steerer tube while the locking pin at the same time engages the lower recess. Such a lower recess can easily and inexpensively be made in a premade component as an integral part of the lower locking plate part of the lower mounting part as a means for generating resistance against turning the lower mounting part in relation to the upper mounting part, and thus of the front wheel, when the lock arrangement is locked.

The curvature of the lower recess may conveniently be selected to be more or less the same as the turning angle of the steerer tube, thus of the handlebars and of the front wheel, when riding. The generated resistance against turning the lower mounting part in relation to the upper mounting part can be made greater the more the curvature of the lower recess deviates from the turning curvature that the steerer tube follows during riding the vehicle. For example can the lower recess be a curved recess, wherein the centre of the curved recess is situated on the axis of the turnable upright axle defined by the steerer tube of the front fork of the vehicle.

In the embodiments wherein the locking pin may engage the adjusting means during riding, the surface parts of the engaging locking pin and adjusting means that touch its other can easily be turned in relation to each other after all. The means formed on said surfaces for generating resistance parts may generate only a small friction force and a negligible resistance that the rider has no problem of overcoming when riding, which friction force however can be substantial when the vehicle is parked so that the locking arrangement can be locked in the non-riding position.

It is practically impossible to handle a vehicle locked in this way with the front wheel turned and locked in an angle in relation to the vehicle frame, which makes the vehicle less vulnerable when exposed to theft. Due to the problems of rolling a vehicle if the front wheel and the rear wheel are arranged in different planes due to the locking arrangement of the present invention the thief will renounce on stealing the vehicle.

Even if the front wheel and the rear wheel are locked in the same plane the handlebars cannot be turned, which also will deprive the thief of the motivation to bring along a locked vehicle because he/she cannot get around corners. The thief will not be able to keep his/her balance when riding the locked vehicle because the required normal turning of the handlebars cannot take place without overcoming the high resistance of the means for generating resistance with the required speed when the locking arrangement is locked; thus when the locking pin engages the adjusting means firmly. Even if the thief should try to steel the vehicle despite the above mentioned obstacles and obstructing friction. Due to the locking arrangement of the present invention the thief needs to overcome the very large resistance that is inherently generated when the vehicle is locked. Turning needed during riding and navigating the vehicle is simply not possible when the lock arrangement is locked.

So as mentioned above once the non-claimed locking pin has been displaced axially towards the adjusting means a firm anti-theft engagement of the locking pin and the adjusting means of the present invention may include that the locking pin and the adjusting means are configured to generate resistance when the locking pin are turned in relation to the adjusting means. This resistance can only be reversed and relieved in response to turning the upper mounting part and the lower mounting part apart again and away from each other about the axle of the steerer tube in the opposite direction and retracting the locking pin axially to relieve the firm engagement between the locking pin and the adjusting means, thereby removing the previously induced resistance against turning the lower mounting part in relation to the upper mounting part.

Accordingly, the resistance generated against turning the lower mounting part in relation to the upper mounting part may be so large in a first position, the non-riding mode, that a turning process cannot take place, and in a second position, the riding mode, be so small or zero that a turning process freely can take place.

At least parts of the surfaces of the locking pin and/or the adjusting means may e.g. be touching each other when the locking pin is engaging the adjusting means, and said surface parts may be formed with the means for generating the resistance when the locking pin and the adjusting means are turned in relation to each other.

The above mentioned means for generating resistance can be of many other different kinds and be a combination of the various features and means. A non-exhaustive list of means and features for generating a resistance against turning the lower mounting part in relation to the upper mounting part, in the non-claimed embodiments of the locking arrangement wherein the cylinder lock is displaceable up and down in the mounting housing, is given below.

One example is when the depth of the lower recess in the lower locking plate part is smaller than the thickness of the lower locking plate part at the lower recess, so that the lower recess is provided with a bottom that guards the locking pin and prevents a thief from knocking up the locking pin from below.

In another example the means for generating a resistance against turning the lower mounting part in relation to the upper mounting part may comprise
- a row of elevations and depressions formed one after the other on at least one of the side walls of the lower recess, and/or
- a row of elevations and depressions formed one after the other on the bottom of the lower recess.

In yet an example the means for generating a resistance against turning the lower mounting part in relation to the upper mounting part may comprise
- a friction lining on at least one of the side walls of the lower recess, and/or
- a friction lining on the bottom of the lower recess.

In yet an example the means for generating a resistance against turning the lower mounting part in relation to the upper mounting part may comprise a friction lining on the locking pin.

In yet an example the means for generating a resistance against turning the lower mounting part in relation to the upper mounting part may comprise that the lower end of the locking pin is spherical thereby being adapted to cooperate with resistance generating means, e.g. irregularities, formed on the bottom of the lower recess.

In yet an example the means for generating a resistance against turning the lower mounting part in relation to the upper mounting part may comprise a spring-loaded ball arranged to be operative between the lower end of the locking pin and the bottom of the lower recess to generate the required level of resistance against the turning that is required to ride the ride the locked vehicle.

Also magnetism can according to the invention be used for generating a resistance against turning the lower mounting part in relation to the upper mounting part, thus for generating a resistance against turning the handlebars and thus the front wheel of the vehicle in the parked position.

Combinations of means for generating resistance are within the scope of the present example and several different means for generating resistance can be used in combination.

In an embodiment of the locking arrangement the cylinder lock with the locking pin is turnable arranged in the lock housing instead of axially displaceable for obtaining the required interlocking of locking pin with at least the upper locking plate part. In the alternative non-claimed second embodiment of the locking arrangement interlocking of locking pin may, optionally, also include that the locking pin can be displaced into the lower locking plate part when the cylinder lock is locked.

A desired angular position of the lock housing on the upper mounting plate can be obtained by turning the upper mounting part about the axle of the steerer tube, thus in relation to the lower mounting part. The locking pin can advantageously be eccentrically placed on the bottom face of the cylinder lock to engage with an oblong slot formed in the upper mounting plate part. When the cylinder lock is operated the cylinder rotates about its axis inside the lock housing, whereby the eccentrically placed locking pin at the bottom of the cylinder lock turns moves the lock housing to and fro the steerer tube.

In an embodiment, which is not part of the present invention the locking arrangement may comprise means for preventing the lock housing from turning in relation to the lower mounting part when the lock housing has been displaced on the upper locking plate part towards the head tube and the steerer tube of the frame of the vehicle.

The means for preventing the lock housing from turning in relation to the lower mounting part may include one or more of the features that
- the free edge of the projection of the lower locking plate part having a row of first teeth, and/or
- at least a part of the groove has at least one projecting bead, and/or
- at least a part of the groove has at least one projecting bead, and/or
- at least one projecting bead is constituted by a plurality of spaced apart individual beads along at least a part of the interior curvature of the groove, and/or
- the row of first teeth is adapted to engage more or less of the at least one projecting bead in the groove.

The locking arrangement may advantageously comprise means, such as e.g. keys and slots, for preventing that the lock housing turns in relation to the upper mounting part when the lock housing is displaced on the upper locking plate part to and fro the head tube of the frame of the vehicle. Thus the lock housing can slide to and fro the head tube in a restricted and controlled manner but not be turned in relation to the upper mounting plate.

In an embodiment, which is not part of the present invention, the locking arrangement can expediently be arranged so that the lock housing can be displaced on the upper locking plate part between a first position closer to the head tube of the vehicle and a second position farther from the head tube of the vehicle, and be arranged so that the resistance against turning the lower mounting part in relation to the upper mounting part is so large in the first position that a turning process cannot take place and in the second position so small or zero that a turning process freely can take place whereby the vehicle is in the non-riding mode in the first position and in the riding mode in the second position.

In the first position would the vehicle then be in the non-riding mode or the parking position, and in the second position in the riding mode, thus in a riding-facilitated non-obstructed position. In positions between the first and second positions can the vehicle be in the non-riding mode too when the resistance against turning the handlebars is large enough.

In an mbodiment of the locking arrangement, which is not part of the present invention, a transverse groove can be formed in the lower part of the lock housing, the lower wall of the groove be a flap in form of the short free leg of the L-shaped extension, an adjusting bead be formed in the groove, the lock housing and the upper mounting part be arranged in such a way that the lock housing can be displaced to and fro on the upper locking plate part into the direction of the head tube of the frame of the vehicle, the lower locking plate part be formed with a lower projection with a curved edge fitting into the groove of the lock housing, the centre of the curve of the edge of the lower projection of the lower locking plate part be situated on the axis of the axle of the steerer tube of the front fork, the edge of said projection be formed with a row of first teeth configured to engage the at least one bead, and the upper and lower mounting parts be cooperating in such a way that turning the lower mounting part in relation to the upper mounting part generates the desired resistance against turning the front wheel away from the plane of the rear wheel (s) by engagement of bead and first teeth.

It is thus possible to either choose a resistance against turning the front wheel by means of the handlebars away from the plane of the rear wheel (s), which is so large that the position of the handlebars is locked in relation to the frame of the vehicle when the lock housing has been displaced on the upper locking plate part to a first position close to the head tube of the frame of the vehicle, or to choose a resistance against turning the front wheel by means of the handlebars away from the plane of the rear wheel(s), which is so small, or even zero, that the handlebars freely can turn the front wheel when the lock housing has been displaced on the upper locking plate part to a second position farther away from the head tube of the frame of the vehicle.

In the present invention the locking arrangement of the present invention the lock housing cannot be moved on the upper mounting plate, such as on the upper mounting plate part, but is instead solid with the upper locking plate.

Locking and unlocking of the anti-theft locking arrangement may then be achieved by the provision of the lock plate component confined slidingly in a lock plate compartment delimited between the upper locking plate part and the lock housing. The lock plate component is actuable to slide between engagement and disengagement with at least the first set of teeth of the lower mounting part, which sliding is actuated by means of an eccentrically placed locking pin at the bottom face of the cylinder lock in response to turning the cylinder lock in the lock housing.

When making the lock housing solid with the upper mounting part it is no longer possible to slide the groove of the L-shaped extension of the lock housing towards steerer tube to accommodate the free front ends of the lower mounting part and/or the upper mounting part to obtain the required engagement between lock arrangement components, and thus obtain the required resistance against turning the lower mounting part below the upper mounting part in the non-riding mode, and then to slide the lock housing away from the steerer tube to set said free front ends free again to ride the vehicle unobstructed in the riding mode.

In this alternative embodiment the lock plate component slides instead. The lock housing remains its position on the upper mounting plate. Engagement of the locking pin and the slide plate component can then take place in a confined inaccessible completely closed lock plate compartment, and both the locking pin and the lock plate component are out of reach of the thief.

The lock housing and the upper mounting part can expediently be combined into solidity by means of welding.

The lock plate compartment may conveniently be recessed in the topside of the upper locking plate part that faces away from the lower locking plate part and may have a free compartment edge. The lock plate component has a slide leg which serves to move the lock plate component to and fro the head tube of the frame of the vehicle. The slide leg mates slidingly into the lock plate compartment and has an actuation hole for the locking pin to pass through to move the lock plate component so that a row of second teeth provided at an end stop can engage into the gaps between at least some of the teeth of the row of first teeth at the lower projection of the lower mounting plate part in the locked condition of the anti-theft locking arrangement. In said locked condition the lock plate component is moved so that the end stop is close to or abuts the free compartment edge of the lock plate compartment and the row of first teeth engages the row of second teeth, which movement is a sliding displacement towards the steerer tube due to the locking pin carrying the slide leg along by its engagement with the actuation hole and the subsequent turning of the cylinder lock in the lock housing.

When the lock housing is solid with the upper mounting part turning of the lower mounting part and the upper mounting part in relation to each other is heavily blocked and obstructed, and maximum resistance against turning the steerer tube of the front fork, and thus the front wheel, is created in a locking arrangement that demonstrates superior anti-theft properties.

The free compartment edge of the lock plate compartment has a row of third teeth alignable for engaging the row of second teeth of the end stop to assure even further security against breaking up the locking arrangement of the present invention. In the parked position of this embodiment at least some of the teeth of the row of first teeth and some of the teeth of the row of third teeth are arranged in alignment to define a common gap having a combined height corresponding substantially to the height of the aforementioned aligned row of second teeth to allow entry of and engagement with the row of second teeth of the end stop as an anti-rotation means, thus to generate resistance against turning. The row of second teeth can conveniently be so high that it can reach well through both the row of first teeth and the row of third teeth.

The lock plate compartment for the lock plate component are conveniently dimensioned and sized so that in the locked condition of the locking arrangement the slide leg of the lock plate component is located as close as possible to the head tube of the frame of the vehicle, and in the unlocked condition of the locking arrangement the slide leg becomes partly retracted from the lock plate compartment inside the groove of the lock housing and has been moved away from the head tube of the frame of the vehicle, which movement of the lock plate component is actuated in response to turning of the locking pin at the bottom face on the cylinder lock in the lock housing.

Accordingly, the slide leg of the lock plate component can reciprocate in the lock plate compartment between a first position wherein the row of second teeth of the end stop engages one or both of the row of first teeth and the row of third teeth, and wherein the lock plate component is not or just slightly inside the groove of the L-shaped extension of the lock housing, and a second position wherein the row of second teeth is set free and the end stop is retracted inside the groove so that the lower mounting part is able to turn unobstructed below the upper mounting part free of the row of second teeth.

The upper vehicle mounting component of the upper mounting part may have an upper upright flange for securing inside the head tube. The upper upright flange may e.g. simply be force-fitted into the internal diameter of the head tube to mount the upper mounting part as a stationary lock part of the locking arrangement of the present invention.

The lower vehicle mounting component of the lower mounting part may have a lower upright flange of a smaller exterior diameter than the interior diameter of the upper upright flange. On the one hand the lower upright flange can be tightly mounted around the steerer tube of the front fork of the vehicle and on the other hand it fits inside the upper upright flange of the upper mounting part to minimize any gap between said axially arranged superjacent mounting plate parts, thereby also reducing the required length of the L-shaped extension of the lock housing and the overall height of the locking arrangement. Accordingly, the upper upright flange must fit firmly around the head tube of the frame, and the lower upright flange must fit firmly inside around the steerer tube of the front fork, so that the upper mounting part is stationary in relation to the frame of the vehicle and the lower mounting part can turn with the steerer tube when the handlebars is turned.

A ball bearing may conveniently be provided between the upper vehicle mounting component and the lower vehicle mounting component to provide a smooth substantially friction-less turning of the lower mounting part below the upper mounting part.

The preferred vehicle is a two-wheeled bicycle. Bicycles are not heavy, and therefore easy to carry along even if locked. However if a bicycle with a locking arrangement is attempted brought along simply by carrying it, it would not be possible to ride the bicycle because the front wheel is either locked in an angle in relation to the rear wheel, or the front wheel is in the same plane as the rear wheel but cannot be turned away from this plane. So the rider cannot turn a bicycle locked with the locking arrangement of the present invention around corners.

The lower mounting part and the upper mounting part of the present invention may be premounted at the factory. If the lower mounting part and the upper mounting part include a ball bearing, these parts takes perform the function of the crown race and the lower head tube race of the vehicle.

Alternatively, the lower mounting part and the upper mounting part may be fitted on the steerer tube of the front fork and the head tube of the frame of the vehicle, respectively, in a subsequent later replacement of at least the crown race and the lower head tube race, e.g. in case a vehicle owner chooses to either add a steering lock, i.e. the locking arrangement of the present invention, to his/her vehicle, or chooses to make use of such a steering lock at a time after he/she has bought a vehicle without integral steering lock, thus without the locking arrangement of the present invention.

The locking arrangement according to the present invention may be used as the sole locking arrangement or be contributory to existing locks already provided to the vehicle.

In order to ensure that that upper mounting parts cannot turn in relation to the head tube once mounted, the upper upright flange of the upper vehicle mounting component may have an exterior knurling.

The same applies for the lower vehicle mounting component, which lower vehicle mounting component may have an interior knurling to ensure that the lower upright flange does not turn once mounted to the upright steerer tube of the front fork.

Experiments have shown that embodiment having knurlings for ensuring the appropriate firm anti-rotational securing to the respective tube of the vehicle is indeed feasible. As an example, if the application force is a pressure of about 5 tons the knurlings resist at least 120Nm and cannot the respective tube.

Knurlings may be replaced with any other means that provides a similar function with respect to surface irregularity so ensure the securing of flange to tube.

The locking arrangement may further comprise a cable lock device as a further safety means to prevent the thief from simply carrying the vehicle away. The cable lock device may include a cable having an end equipped with a lock fitting and an opposite end equipped with a hole for allowing passing of the lock fitting, which lock fitting is adapted for being locked together with the upper mounting plate. Further explanations of the cable lock device and how to use it together with the locking arrangement according to the present invention is described below in relation to the detailed description.

The invention will now be described and explained in greater details below while disclosing further advantageous features and technical effects and describing exemplary embodiments with reference to the drawing, in which
Fig. 1 is a perspective view of a locking arrangement mounted on a two-wheeled vehicle of which is seen only a fragment of the front part of the vehicle, which locking arrangement not is part of the present invention
Fig. 2 is an exploded view of the locking arrangement seen in fig. 1, shown in perspective and in a larger scale,
Fig. 2a shows the lock housing of the locking arrangement of fig. 1 with retracted cylinder lock in perspective from below, in a view inside the groove,
Fig. 3 shows the assembled locking arrangement seen in fig. 2 and shown in a partly angular offset state of the upper mounting part in relation to the lower mounting part,
Fig. 4 shows the same but in a vertical section,
Fig. 5 illustrates a first variant of the locking arrangement seen in fig. 1,
Fig. 6 illustrates a second variant of the locking arrangement seen in fig. 1,
Fig. 7 illustrates a third variant of the locking arrangement seen in fig. 1,
Fig. 8 illustrates a fourth variant of the locking arrangement seen in fig. 1,
Fig. 9 is an exploded view of a second embodiment of a locking arrangement, which is not part of the invention, seen in perspective,
Fig. 9a shows a lock housing for the locking arrangement seen in fig. 9 with retracted cylinder lock in perspective from below, in a view inside the groove,
Fig. 10 shows the assembled locking arrangement seen in fig. 9 and shown in a partly offset state similar to the view of the first embodiment which is not part of the invention, seen in fig. 3
Fig. 11 shows the same but seen in a vertical section and in a non-riding mode of the vehicle,
Fig. 12 shows the same as in fig. 11 but in the riding mode of the vehicle,
Fig. 13 is an exploded view of a fragment of a cable lock in cooperation with the locking arrangement seen in fig. 1, seen in perspective,
Fig. 14 is a perspective view of the assembled cable lock device seen in fig. 13,
Fig. 15 is an exploded view of a locking arrangement seen from above, which locking arrangement is not part of the present invention
Fig. 16 shows the same seen from below.
Fig. 17 is a sectional view of the locking arrangement seen in fig. 15 mounted to the vehicle, which vehicle is not shown,
Fig. 18 is an exploded view of an embodiment of a locking arrangement of the present invention seen from above,
Fig. 19 shows the upper mounting part and the lower mounting part of the locking arrangement seen in fig. 18 in the first position wherein the locking arrangement is locked,
Fig. 20 shows the same in the second position wherein the locking arrangement is not locked,
Fig. 21 is an exploded view of a modified embodiment of a locking arrangement seen from above and being adapted for use with a cable lock,
Fig. 22 shows the same oblique from below, and
Fig. 23 shows the modified embodiment in assembled state.

In the following detailed description of the invention it is assumed that the two-wheeled vehicle is a bicycle 1. This should by no means be construed as a limiting or exhaustive example. The locking arrangement can be used on many other vehicles having a front wheel arranged turnable on an axle in a head tube. The locking arrangement may even be used for one-wheeled vehicles. Within the scope of the present invention the resistance against turning the front wheel by means of the handlebars away from the plane of the rear wheel (s), thus turning the steerer tube, the handlebars and the lower mounting part in relation to the upper mounting part is the effort force that must be overcomed in order to turn the front wheel away from the plane of the rear wheel(s).

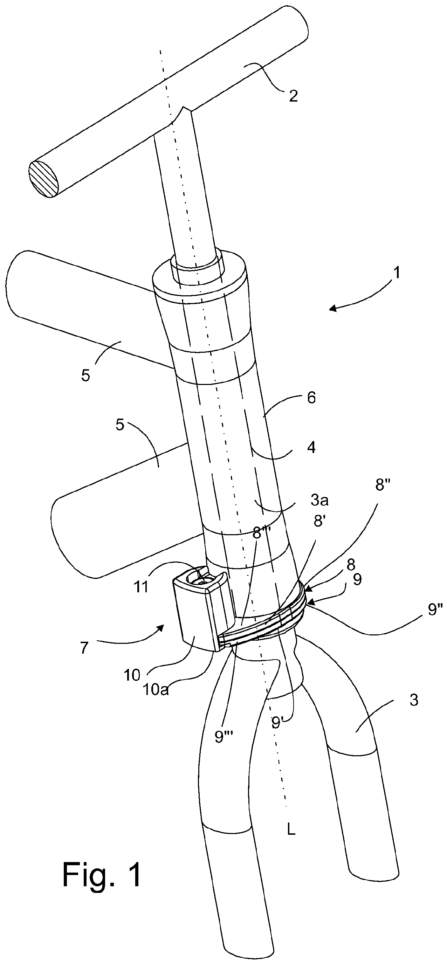

Fig. 1 shows a fragment of the front part of the bicycle 1 comprising handlebars 2 connected to a front fork 3 with a steerer tube 3a via a stem 4, and also a frame 5 with a head tube 6 in which the stem 4 is placed turnable to turn a front wheel (not shown) of the bicycle 1 away from the plane of the rear wheel(s).

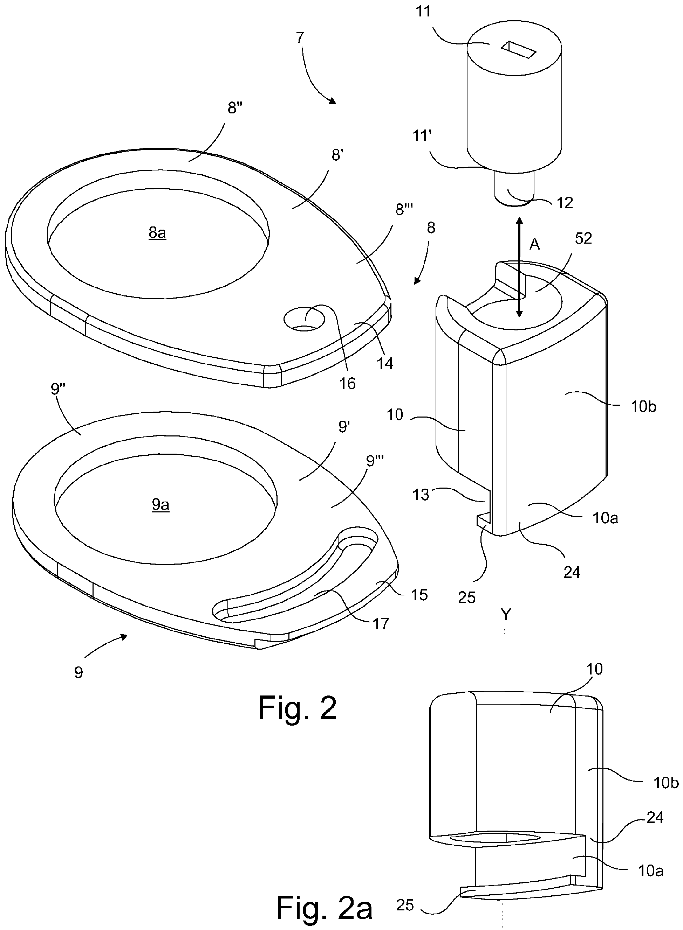

Fig. 2 - 8 show a a locking arrangement 7, which in mounted state functions as a safeguard for preventing theft of the bicycle 1.

The locking arrangement 7 comprises, as it appears from especially figs. 1 - 4, an upper mounting part 8, a part of which is mounted on the head tube 6 of the frame 5 of the bicycle 1, and a lower mounting part 9 a part of which is mounted on the steerer tube 3a of the front fork 3 of the bicycle 1 to turn below the upper mounting part 8. The lower head tube race and the crown race are present but not shown.

The upper mounting part 8 is defined by an upper mounting plate 8' and a lock housing 10. The upper mounting plate 8' has an upper vehicle mounting component 8" and an upper locking plate part 8''' protruding radially from the upper vehicle mounting component 8" when the upper mounting part 8 is mounted to the bicycle. The upper vehicle mounting component 8" has an upper through-hole in form of an upper mounting opening 8a sized to receive the steerer tube 3a via a lower head tube race (not shown) in operative connection with the stem 4.

The lower mounting part 9 is defined by a lower mounting plate 9' that includes a lower vehicle mounting component 9" and a lower locking plate part 9''' that protrudes radially from the lower vehicle mounting component 9". The lower vehicle mounting component 9" has a lower through-hole in form of a lower mounting opening 9a for, via the crown race, mounting the lower mounting part 9 around and to the steerer tube 3a that defines an upright axle 4' of the front fork 3 of the vehicle 1, which steerer tube 4 is turnable arranged in a head tube 6 of the frame 5 of the bicycle 1.

The lock housing 10 of the upper mounting part 8, which is arranged at the topside of the upper mounting plate 8', is housing a cylinder lock 11 in such a way that the cylinder lock 11 can be displaced, but still secured inside the housing, a short distance between an upper position and a lower position, as indicated by double arrow A. The bottom face 11' of the cylinder lock 11 has a locking pin 12 and the distance that the cylinder lock is displaced can be about the same length as the locking pin.

The lock housing 10 for the locking arrangement is, as best seen in figs. 2 and 2a, formed with an L-shaped extension 10a that defines a transverse groove 13, which transverse groove 13 is delimited by a first leg 24 in extension of a main body 10b of the lock housing 10 and a second leg 25 facing at a substantially right angle from the end of the first leg 24 towards the centre axis Y of the lock housing 10.

The upper locking plate part 8''' of the upper mounting plate 8' ends in an upper projection 14, and the lower locking plate part 9''' of the lower mounting plate 9' ends in a lower projection 15 below the upper projection 14 so that both the upper projection 14 and the lower projection 15 fit into the groove 13.

These measures provide an effectively safeguarding against a thief who makes attempts to steal the bicycle 1 by breaking the projections 14, 15 of the upper mounting part 8 and the lower mounting part 9 apart from each other and of the lock housing to be able to ride or pull away the bicycle 1.

As seen best in fig. 2 the upper locking plate part 8''' of the upper mounting plate 8' is formed with a through-bore 16 fitting to the locking pin 12, and the lower locking plate part 9''' of the lower mounting plate 9' is formed with a curved recess 17, which is accepting the locking pin 12. The curved recess 17 defines a section of a circle having it's centre situated on the axis L of the turnable stem 4 between the handlebars 2 and the front fork 3 of the bicycle 1.

The upper mounting part 8 therefore is stationary disposed on the bicycle 1 while the lower mounting part 9 is disposed turnable on the bicycle .

That implies that turning the handlebars 2 of the bicycle 1 an angle will get the lower mounting part 9 to turn a corresponding angle in relation to the upper mounting part 8.

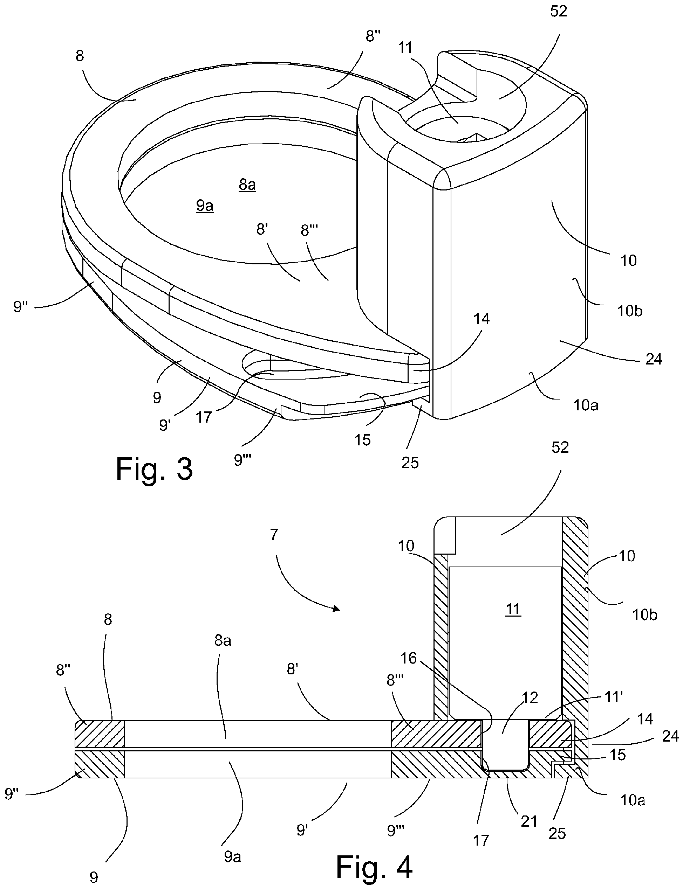

Fig. 4, which is a vertical section of the first embodiment of the locking arrangement 7 which is not part of the invention, shows that said turning of the lower mounting part 9 in relation to the upper mounting part 8 implies that the locking pin 12 is engaging the curved recess 17 formed in the lower locking plate part 9''' of the lower mounting plate 9' via the through-bore 16 in the upper locking plate part 8''' of the upper mounting plate 8' when the locking pin 12 is in its lowered position.

That situation corresponds to the situation in which a bicycle 1 is locked by means of the known technique but in this case without actually locking the bicycle when the locking pin 12 and the curved recess 17 are arranged in such a way that the curved recess 17 formed in the lower locking plate part 9''' of the lower mounting plate 9' is allowed to turn a desired angle in relation to the stationary locking pin 12 without meeting any resistance.

One object of the invention is however on the contrary to form the locking pin 12 and the curved recess 17 so that turning the curved recess 17 in relation to the locking pin 12 in fact generates a very high resistance when the locking arrangement is locked and the locking pin 12 is in full engagement with the curved recess 17.

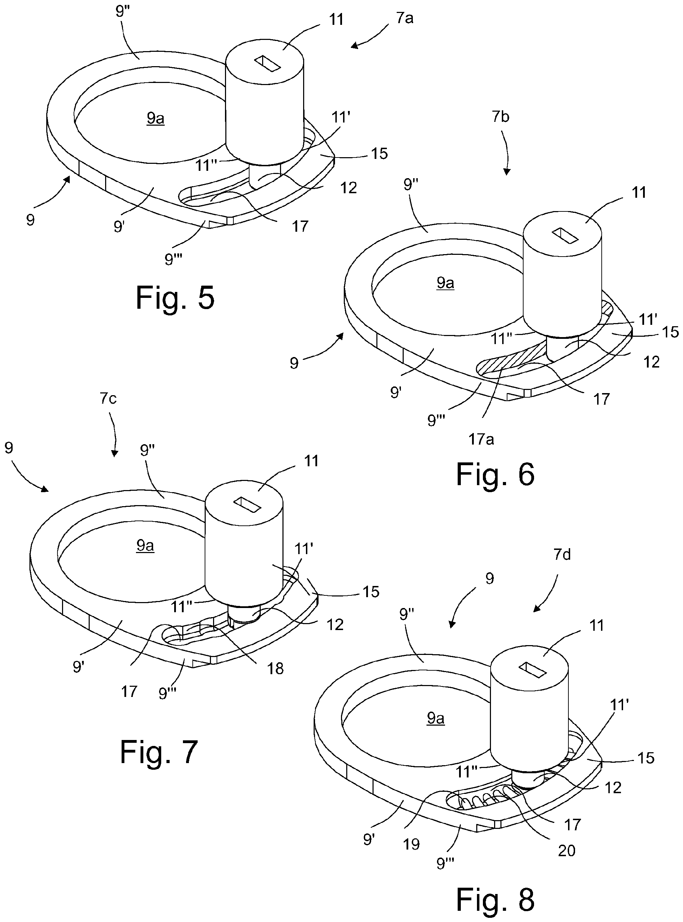

Figs. 5 - 8 illustrate how the generation of a resistance against turning of the front wheel of the bicycle by means of the handlebars away from the plane of the rear wheel (s) can take place in four different variants of adjusting means of the locking arrangement of the present invention. For the sake of clearness these figures show only the lower mounting part 9 with the curved recess 17 and the cylinder lock 11 with the locking pin 12 of the upper mounting part 8, which locking pin 12 is engaging the curved recess 17 formed in the lower locking plate part 9''' of the lower mounting plate 9' via the through-bore 16 in the upper locking plate part 8''' of the upper mounting plate 8'.

In the variant 7a seen in fig. 5 the above mentioned resistance is simply provided by means of magnetism. At least in the areas where the locking pin 12 touches the lower recess 17 the goods around the lower recess and/or the locking pin is/are magnetic but the surfaces of both the locking pin 12 and the lower recess 17 are without other mechanical or physical resistance means, such as e.g. irregularities. Thus in the magnetic embodiment the parts of the surfaces of the locking pin and/or the adjusting means that are touching each other when the locking pin is engaging the adjusting means, which in this variant 7a are the magnetic parts of the lower locking plate part 9''', can be smooth without any topographical alterations, although such are not excluded in combination with magnetic means as the means for generating resistance against turning the front wheel by means of the handlebars away from the plane of the rear wheel(s) when the locking arrangement is locked.

In the variant 7b seen in fig. 6 the resistance is provided by means of a friction lining 17a, e.g. a brake lining on at least a part of the sides of the lower recess 17, optionally all over the sides of the lower recess. The friction lining 17a is or is part of the adjusting means.

In the variant 7c seen fig. 7 the resistance is provided when the locking pin 12 engages the adjusting means in form of elevations and depressions 18 formed on the sides of the lower recess 17 of the lower locking plate part 9'''.

In the embodiment seen fig. 8 the adjusting means and the resistance are provided by means of elevations and depressions 18 formed on the bottom of the lower recess 17 of the lower locking plate part 9'''. The elevations can e.g. be a row of thin rods 19 fastened to the sides of the lower recess while the depressions are the gaps 20 between the thin rods 19.

The end face of the locking pin 12 can moreover be spherical (not seen), in order to firmly engage e.g. the lower recess 17 of the variant 7c seen in fig. 7. In the variant 7d seen in fig. 8 a spring-loaded ball (not seen) can also be arranged between the lower end of the locking pin 12 and the bottom of the lower recess 17 to allow a certain degree of axial flexing of the length of the locking pin 12.

The resistance against turning the front wheel by means of the handlebars away from the plane of the rear wheel(s) can within the scope of the present invention be provided in other ways. But in all cases the size of the resistance is in accordance with the invention not so large that the handlebars of the bicycle cannot in practise be manually turned when the locking arrangement is not locked and the locking pin displaced upwards away form the lower recess. When the locking pin is moved into the lower recess the resistance is on the other hand so large that it in practise is impossible to ride the bicycle owing to the fact that front wheel cannot be turned by means of the handlebars away from the plane of the rear wheel (s) and the thief is not able to operate and ride and manoeuvre the bicycle. The thief would give up to ride away with the bicycle.

The thief can however pull along or carry the bicycle away, but such an action would make him/her conspicuous and maybe call the attention of the public and/or police to the thief. Such operation by the thief is moreover a strenuous task to carry out, and besides that, the thief has no interest in stealing a bicycle, which he anyhow cannot use.

The upper and lower mounting plates 8',9' may within the scope of the present invention be made in many ways, e.g. by machining.

According to the invention the mounting plates 8', 9' may in some embodiment simply be flat plates, which advantageously can be manufactured by means of inexpensive operations like e.g. laser cuttings, stamping and punching from inexpensive plate materials, e.g. corrosion-resistant stainless steel.

The depth of the lower recess 17 in the lower locking plate part 9''' of the lower mounting plate 9 is according to the invention furthermore smaller than the thickness of the lower mounting plate 9' at this location. The bottom 21 of the lower recess 17 is defined in the lower locking plate part 9''' of the lower mounting plate 9'. This bottom 21 effectively prevents a thief from knocking up the locking pin 12 because he/she cannot hit it directly from below. This knocking up operation is in fact possible when using the known locking arrangements described in relation to the above prior art locking arrangements.

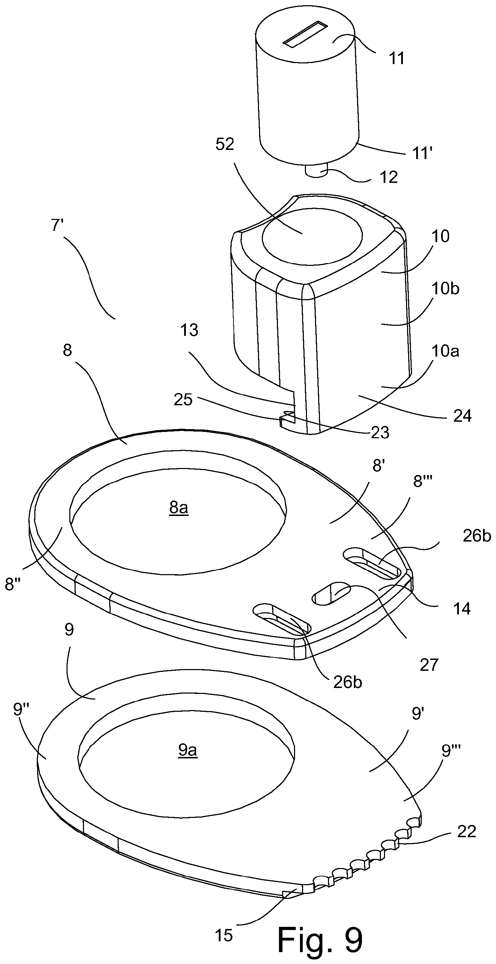

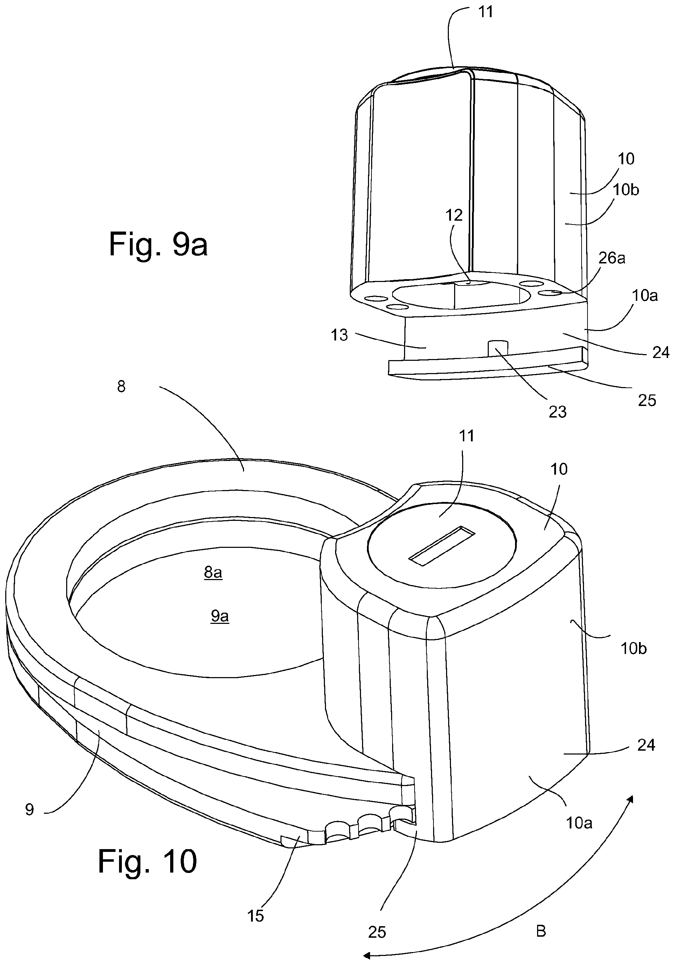

Fig. 9 - 12 show a a locking arrangement 7', which is not part of the present invention, which locking arrangement 7' in mounted state also functions as a safeguard for preventing theft of the bicycle 1 and knocking up the locking pin 12. In the locking arrangement 7' the lock housing 10 is displaced to and fro the head tube 6 to lock and unlock the locking arrangement.

This locking arrangement 7' 7' corresponds substantially to the locking arrangement 7 and functions by means of corresponding elements and components. The general components of the locking arrangement 7' will therefore not be described again, as well as the elements in common of the first and second embodiment of locking arrangements are indicated with the same reference numerals.

In the locking arrangement7' the resistance against turning the front wheel by means of the handlebars away from the plane of the rear wheel(s), and thus against turning the lower mounting part 9 in relation to the locking pin 12 of the upper mounting part 8 is however not obtained by friction of an adjusting means as in the first embodiment 7 or in the variants 7a,7b,7c,7d, e.g. not by means of elevations and depressions 18 in the lower recess 17.

Instead the resistance against turning the front wheel by means of the handlebars away from the plane of the rear wheel (s) is obtained by some engaging components and interlocking of the locking pin and at least the upper mounting plate 8'. In the present second embodiment 7' the curved projection 15 has its centre situated on the axis of the stem 4 of the handlebars 2 and thus of the axis of the steerer tube 3a, which curved projection 15 is formed with a row of first teeth 22 or similar means cooperating with an opposite bead 23 formed integral with the first leg 24 of the L-shaped extension 10a of the lock housing 10, thus engaging inside the groove 13, as seen in fig. 9a. The opposite bead 22 and the row of first teeth 22 engage to prevent turning of the front wheel by means of the handlebars away from the plane of the rear wheel (s) when the lock housing 10 is moved towards the head tube 6.

The opposite bead 23 may be located at the middle of the row of first teeth 22, seen in the situation in which the handlebars 2 of the bicycle 1 are not turned in relation to the frame 5 of the bicycle 1, or, said in other words, is in the zero position for riding the bicycle straight away.

A resistance against turning the lower mounting part 9 in relation to the upper mounting part 8 is in this second embodiment 7' of the present invention generated when the first teeth 22 on the lower projection 15 of the lower locking plate part 9''' of the mounting plate 9' is passing or engaging the opposite bead 23 inside the groove 13 of the L-shaped extension 10a of the lock housing 10.

The lock housing 10 is placed on the upper mounting plate 8' so that the lock housing 10 can slide to and fro the head tube 6, thus into the direction of the axis X of the upper mounting opening 8a without at the same time being turned.

As seen best in fig. 9a, to that aspect are two vertical keys 26a provided on the bottom face 11' of the main body 10b of the lock housing 10 for engaging each there opposite longitudinal slot 26b formed in the upper mounting plate 8'.

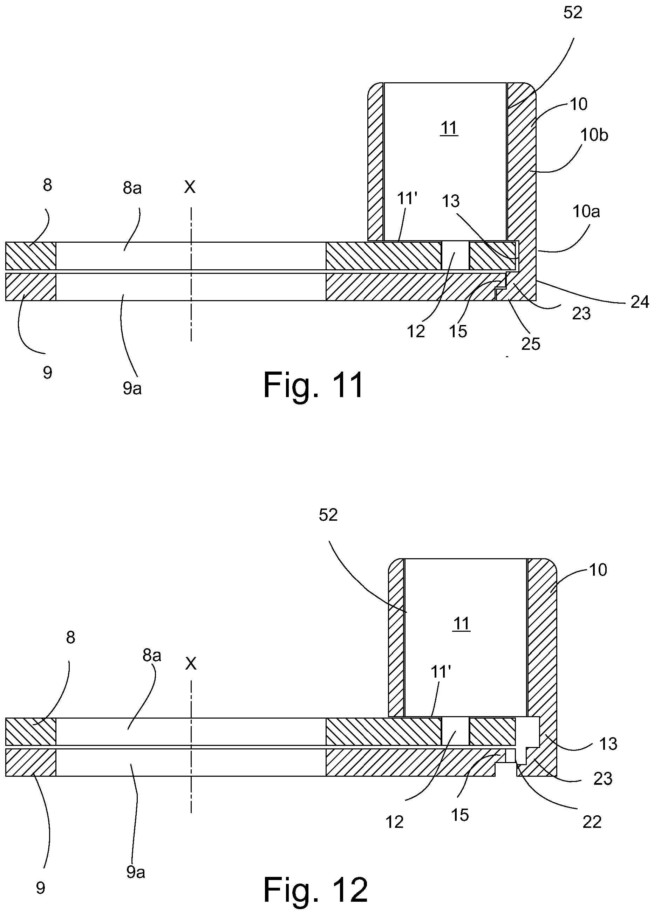

An oblong transverse slot 27 is furthermore formed in the upper mounting plate 8' and the locking pin 12, which is placed eccentrically on the bottom face 11' of the cylinder lock 11, are arranged to engage the oblong transverse slot 27, as seen in figs. 11 and 12.

When the locking pin 12 engages the oblong slot 27 turning the cylinder lock 11 in the direction indicated by curved arrow B in fig. 10 moves the lock housing 10 between the extreme positions seen in figs. 11 and 12. The radial travel of the lock housing 10 is defined by the size of the oblong slot to substantially correspond to the depth of the groove 13 or a corresponding travel that moves the lock housing 10 away from the engagement between the row of first teeth 22 and the opposite bead 23. The travel can however be stopped in any desired position along the upper mounting plate 8'.

That implies advantageously that the resistance against turning the lower mounting part 9 in relation to the upper mounting part 8 is decided by arranging the cooperating row of first teeth 22 and bead 23 in a selected suitable way.

In a first position seen in fig. 11, in which the lock housing 10 is close to the head tube 6 of the bicycle 1, is the resistance to overcome in order to turn the front wheel by means of the handlebars away from the plane of the rear wheel(s) so large that said turning cannot take place. The bicycle 1 is brought into the non-riding position in which the bicycle 1 cannot in practice be stolen. The bicycle 1 has no value to the thief if stolen when locked.

In a second position seen in fig. 12, in which the lock housing 10 is far from the head tube 6 of the bicycle 1, is the resistance to overcome in order to turn the front wheel by means of the handlebars away from the plane of the rear wheel(s) on the other hand zero or inferior so that the turning of the handlebars 2 to move the front wheel about the axis X of the steerer tube 3a freely can take place. The bicycle is now brought into the riding position.

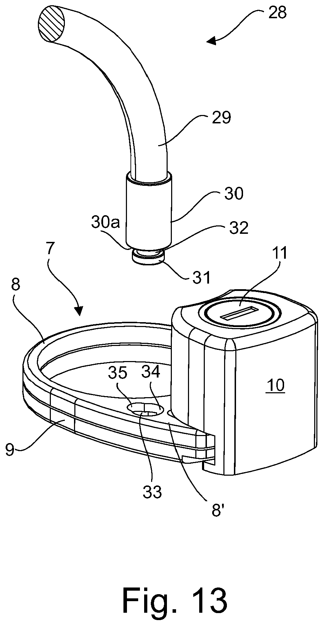

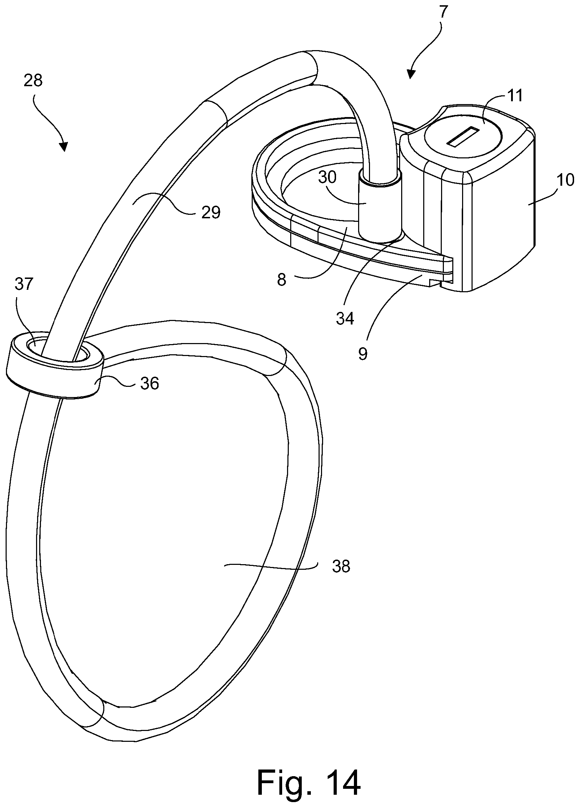

Figs. 13 and 14 show a locking arrangement according to the invention including a cable lock device.

From the previously mentioned International Patent Application no. WO 96/26102 is known a cable lock device adapted to be connected to a theft-safeguarding device for a bicycle. More precisely is an engaging pin at the cable end in this case pushed through an upper opening in an upper mounting plate of the theft-safeguarding device and further through a lower opening in a lower mounting plate for finally being sideways displaced to a more narrow section of the lower opening whereby the desired connection is secured. The upper and lower mounting plates have simultaneously been locked together with the consequence that the handlebars of the bicycle cannot be turned.

The known cable lock device can therefore not be used in connection with the locking arrangement of the first embodiment of the present invention since the handlebars of the bicycle according to some embodiment of the invention must be able to be turned different angles albeit subject to a substantial resistance force to be overcomed when in locked non-riding positions. Furthermore the known cable lock requires holes through the lower mounting part, so that not only the locking pin can be knocked up, but also the cable lock device is vulnerable due to being exposed.

In fig. 13 is a fragment of the cable lock 28 seen in position for being assembled with the first embodiment 7 of a locking arrangement of the present invention. Said cable lock 28 has a cable 29, which has an end equipped with a lock fitting 30 with and lower end face 30a with a protruding engaging pin 31 formed with a circumferential groove 32.

A cut-out section 33 in the upper mounting plate 8' of the first embodiment of a locking arrangement 7 has a first opening 34 and a second opening 35, which first opening 34 is in communication with the second opening 35, and serves for receiving the engaging pin 31 when the cable lock 28 is locked to the locking arrangement 7. To allow this locking process to be carried properly out the cut-out section 33 is formed with the following dimensions.

The diameter of the first opening 34 is the same or larger than the diameter of the engaging pin 31. The diameter of the second opening 35 is the same or larger than the inner diameter of the circumferential groove 32. The total depth of the cut-out section 33 is the same or larger than the length of the engaging pin 31. The depth of the second opening 35 is the same or larger than the horizontal extensions of the circumferential groove 32. The width of the cut-out section 33 is so large that the circumferential groove 32 can enter the second opening 35 without being hindered of the upper wall (not seen) of the cut-out section 33.

Locking the cable 29 to the locking arrangement7 takes place in the following steps.

Pushing the engaging pin 31 down into the first opening 34 of the cut-out section 33 until the lower end face 30a of the lock fitting 30 is abutting the upper face of the upper mounting plate 8'.

Pushing the lock fitting 30 with the engaging pin 31 sideways into the second opening 35 in the cut-out section 33 until parts of the upper and lower walls of the groove 32 have passed some of the edge of the second opening 35 and possibly also some of the edge the first opening 34. In this position can the lock fitting 30 with the engaging pin 31 not be displaced perpendicular to the face of the upper mounting plate 8'.

Pushing the lock housing 10 in position on the upper face of the upper mounting plate 8' and fastening the housing 10 to the upper mounting plate 8' by displacing the cylinder lock 11 downwards so that the locking pin 12 (not seen) on the cylinder lock 11 via the through-bore 16 (not seen) in the upper mounting plate 8' is entering the curved recess 17 (not seen) in the lower mounting plate 9'.

The geometry of this construction is thus adapted in such a way that the lock housing 10 now is obstructing the engaging pin 31 from being withdrawn from the second opening 35. The engaging pin 31 of the cable lock 28 has effectively been secured to the locking arrangement 7.

This situation is seen in fig. 14 where the remainder of the cable 29 is seen too. In the end of the cable 29 opposite the lock fitting 30 the cable 29 is equipped with a cable ring 36 or other suitable loop means. The cable 29 with the cable pin 31 has been pulled through the opening 37 in the cable ring 36 in such a way that a cable loop 38 is formed.

In order to further secure the bicycle 1 against theft is the cable 29 with the engaging pin 31 first pulled around a stationary object like e.g. a lamp-post (not seen) and/or through e.g. the front wheel (not seen) of the bicycle 1 and then through the opening 37 in the cable ring 36, after which the engaging pin 31 of the cable lock 28 is secured to the locking arrangement 7, as explained above in relation to fig. 13.

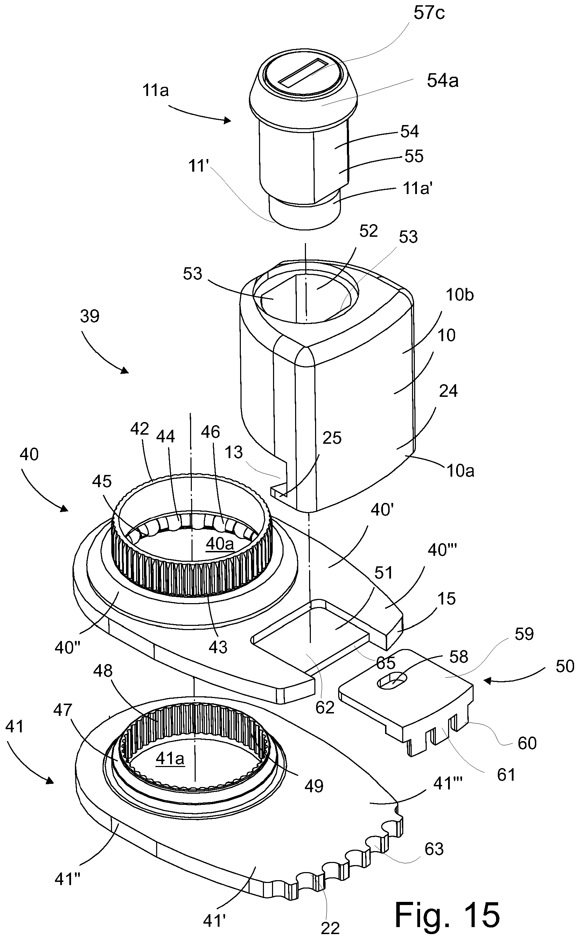

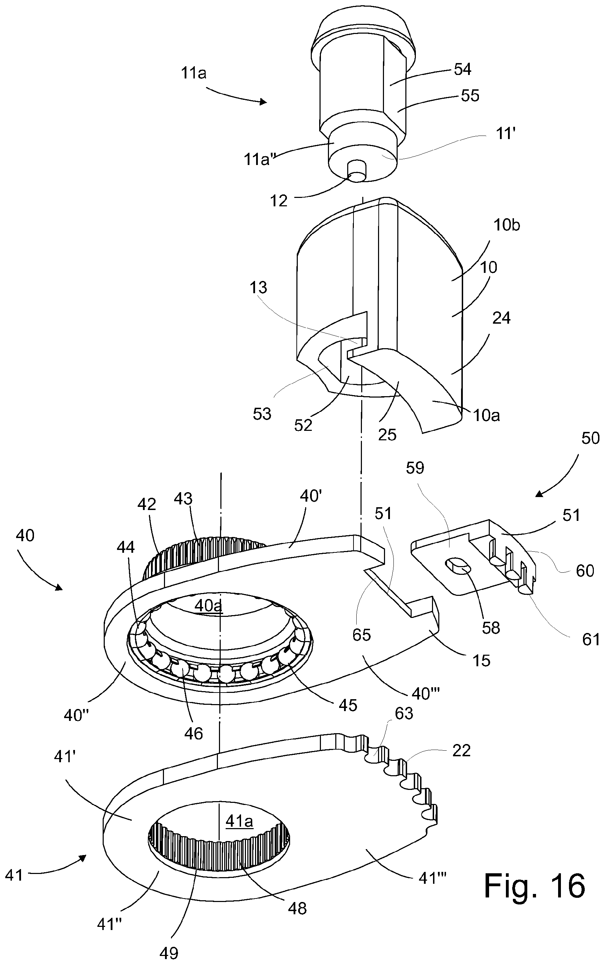

Figs. 15 and 16 are exploded views of a of a locking arrangement 39 seen from above and below, respectively.

The upper mounting part 40 includes an upper mounting plate 40' with an upper vehicle mounting component 40" in extension of an upper locking plate part 40''', and a lock housing 10 that accommodates a second embodiment of a cylinder lock 11a.

The lower mounting part 41 includes a lower mounting plate 41' with a lower vehicle mounting component 41" and a lower locking plate part 41'''.

The upper vehicle mounting component 40" has an upper upright flange 42 that delimits an upper mounting opening 40a in form of a through-hole. The upper upright flange 42 fits inside the head tube 6 of the bicycle 1 and is sized to receive the diameter of the steerer tube 3a. The upper upright flange 42 has an exterior knurling 43 for improved securing inside the head tube 6 and a lower head tube race 44 for improved turning of the steerer tube 3a. A ball bearing 45 with circumferentially distributed balls 46 is provided in the lower head tube race 44 below the circumferential free perimeter of the upper upright flange 42.

The balls 46 of the ball bearing 45 are kept between the lower head tube race 44 of the upper vehicle mounting component 40" and a crown race 47 provided at a lower upright flange 48 of the lower vehicle mounting component 41" to create a friction-reducing bearing that facilitates turning of the front wheel by means of the handlebars away from the plane of the rear wheel(s) during riding the unlocked bicycle 1. The ball bearing 45 of the third embodiment of the locking arrangement thus consist essentially of a ring-shaped track containing freely revolving hard metal balls against which the rotating axle of the steerer tube 3a can turn substantially without friction.

The lower upright flange 48 delimits a lower mounting opening 41a for mounting the lower mounting part 41 around the steerer tube 3a. The lower vehicle mounting component 41" has an interior knurling 49 serving to prevent the lower mounting part 41 from rotating about the steerer tube 3a of the front fork 3 once the lower upright flange 48 has been forcible pressed to fit around said steerer tube 3a, e.g. as a shrink-on sleeve.

To obtain a similar firm and durable connection of the upper upright flange 42 to the head tube 6 the exterior knurling 43 of the upper upright flange 42 is inserted into the bore of the head tube 6 at the end where the steerer tube 3a is also inserted to be operative by the stem 4 of the handlebars 2.

The knurlings 43,49 provide a massive force against relative turning on or in relation to the respective tubes 3a,6. The lower upright flange 48 extends inside the upper upright flange 42 so that the ball bearing 45 is closed and functional once the third embodiment, which is not part of the invention, 39 of a locking arrangement is mounted to the bicycle 1.

For the second embodiment, which is not part of the invention, 7' the lock housing 10 is displaceable on the upper mounting plate 8' to and fro the head tube 6 of the frame 5 of the bicycle 1, however for the third embodiment 39 the lock housing 10 cannot be displaced on the upper mounting plate 40' to and fro the head tube 6 of the frame 5 of the bicycle 1.

Instead a separate lock plate component 50 is provided in a recessed lock plate compartment 51 in the upper locking plate part 40''' of the upper mounting plate 40'. The lock housing 10 is made solid, e.g. by welding, with the upper mounting plate 40' once the lock plate component 50 has been placed inside the lock plate compartment 51. The lock plate compartment 51 has now been closed in a manner that allows the lock plate component 50 to slide to an fro the head tube 6. Thus the lock plate component 50 is perfectly confined inside the lock plate compartment 51.

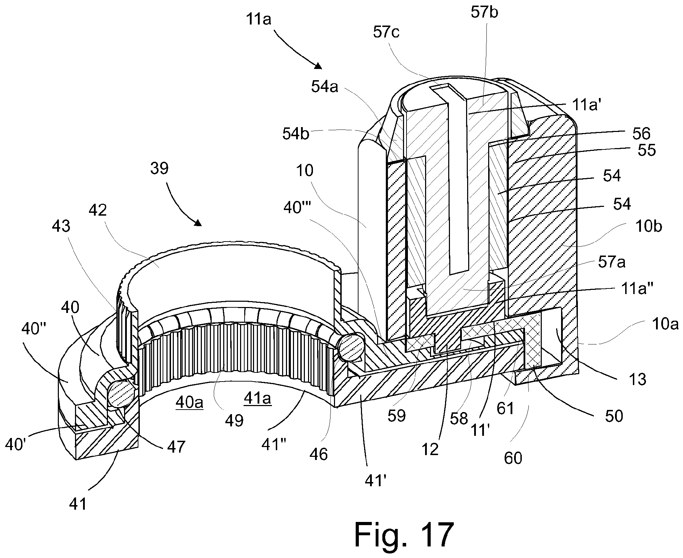

As seen best in the sectional view of fig. 17 the locking arrangement 39, the locking arrangement has a cylinder lock 11a, consisting of a cylinder part 11a' and a cylinder extension 11a" with a bottom face 11' wherefrom the eccentrically situated locking pin 12 protrudes. The cylinder lock may be a conventional cylinder lock as described above and the details of the specific components of such a conventional cylinder lock which interact to turn the cylinder lock, e.g. by means of a key, is not illustrated in fig. 17, except for a schematic keyhole.

The lock housing 10 has a first bore 52 with opposite flat longitudinal sides 53. A guide 54 having corresponding flat exterior sides 55 and a second bore 56 is inserted in the first bore 52. The cylinder part 11a' of the cylinder lock 11a is inserted turnable inside the second bore 56 and has a cylinder part end 57a opposite a cylinder head part 57b with a keyhole 57c for a key (not seen) for turning the cylinder lock 11 and thus turning the locking pin 12. The cylinder head part 57b is nested in an enlarged upper part 54a of the guide 54. The enlarged upper part 54a has a shoulder 54b that is non-turnable and cannot be axially displaced, but is nested at the top of the lock housing 10, optionally as shown in the figs. protruding from said lock housing 10. The enlarged upper part 54a can also be embedded in the first bore 52 which first bore 52 may be provided with a lid (not shown) to exclude entrance of rain and dirt. The cylinder part end 57a protrudes and engages into the cylinder extension 11a" to turn said cylinder extension 11a", and thus turn the eccentrically situated locking pin 12 at the bottom face 11a' of the cylinder extension 11a".

The locking pin 12 engages with an oblong transverse slot 58 in the lock plate component 50, so that when the cylinder extension 11a" turns the eccentrically situated locking pin 12 brings the lock plate component 50 to slide radially in the lock plate compartment 51. Due to the flat exterior sides 55 of the guide 54 mating the flat longitudinal sides 53 of the first bore 52 of the lock housing 10 the guide 54 does not turn in relation to the first bore 52 when the cylinder part 11a' is turned in order to turn the cylinder extension 11a" with the locking pin 12.

The lock plate component 50 is substantially L-shaped with a slide leg 59 that extends via a bend, of e.g. about 90 °, into an end stop 60 that has a row of second teeth 61 facing the row of first teeth 22 on the lower projection 15 of the lower locking plate part 41''', which row of second teeth 61 is sliding towards the lock plate component 50, and thus towards the head tube 6.

The slide leg 59 slides on the bottom 62 of the lock plate compartment 51 between a first locking position wherein the row of second teeth 61 engage the gaps 63 between the teeth of the row of first teeth 22 so that the lower mounting part 41 cannot turn in relation to the upper mounting part 40, and a second locking position wherein the end stop 60 is retracted inside the groove 13, and wherein the lower mounting part 41 can turn in relation to the upper mounting part 40. In the first locking position the locking arrangement is locked and the bicycle 1 in the non-riding position and in the second locking position the locking arrangement is unlocked and the bicycle 1 in the riding position.

In the present exemplary third embodiment, which is not part of the invention, the row of first teeth 22 has sixth teeth that delimit five gaps 63 for receiving respective one or more of three teeth of the row of second teeth 61 in turned or not turned position of the lower mounting part 41 in relation to the upper mounting part 40.

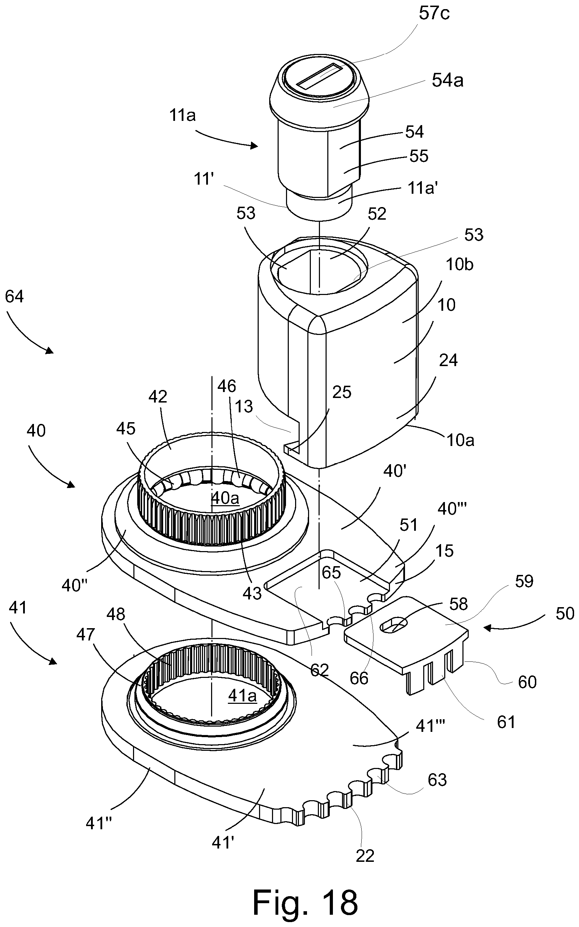

Fig. 18 is an exploded view of an embodiment 64 of a locking arrangement of the present invention seen from above. The fourth embodiment of a locking arrangement corresponds, with only minor exceptions, to the locking arrangement 39, and for like parts same reference numerals are used.

The locking arrangement 64 differs from the locking arrangement 39 in that a free compartment edge 65 of the lock plate compartment has a row of third teeth 66 for engaging with both the row of first teeth 22 and the row of second teeth 61 in a manner similar to the manner described for the third embodiment, which is not part of the invention, 39 to obtain even further securing against unintentional turning of the upper mounting part 40 in relation to the lower mounting part 41. The number of teeth of the row of third teeth 66 may preferably be similar to the number of teeth of the row of second teeth 22 to ensure full and complete interlocking of the lock plate component 50 to the free compartment edge 65 of the lock plate compartment 51.

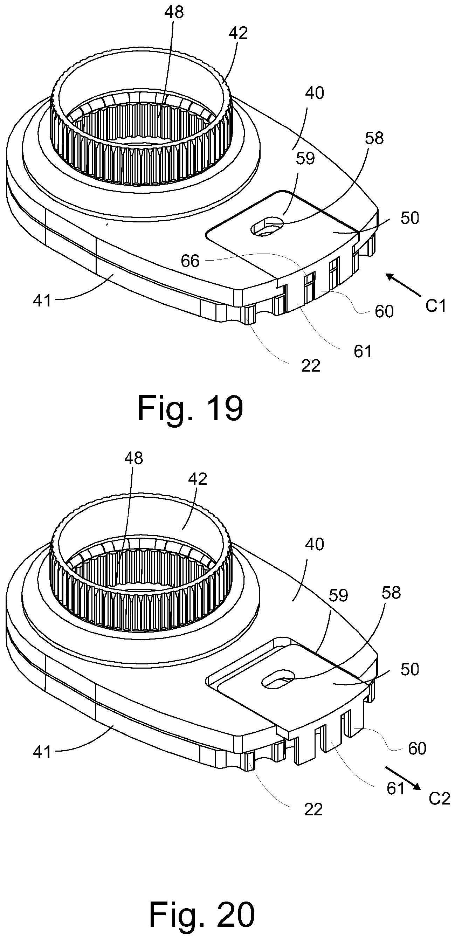

Fig. 19 shows the upper mounting part 40 and the lower mounting part 41 of the fourth embodiment 64 of a locking arrangement in assembled state, in the configuration wherein it has when mounted on a bicycle (no shown). The fourth embodiment 64 is in the first position wherein the locking arrangement 64 is locked and the lock plate component 50 has been fully displaced radially inside the lock plate compartment 51, as indicated by arrow C1 towards the head tube 6. The slide leg 59 abuts the bottom 60 of the lock plate compartment 51 and the row of second teeth 61 of the end stop 60 engages both the row of first teeth 22 of the lower projection 15 of the lower locking plate part 41''' as well as the row of third teeth 66 of the free compartment edge 65 of the lock plate compartment 51.

Fig. 20 shows the same in the second position wherein the locking arrangement is not locked and the lock plate component 50 has been retracted radially partly out of the lock plate compartment 51, as indicated by arrow C2, whereby the end stop 60 disengages both the row of first teeth 22 of the lower projection 15 of the lower locking plate part 41''' and the row of third teeth 66 of the free compartment edge of the lock plate compartment 51 of the fourth embodiment 64 of a locking arrangement, when said locking arrangement is brought into the second position.

Both the first position and the second position are achieved by turning the locking pin 12 inside the oblong transverse slot 58 as described above.

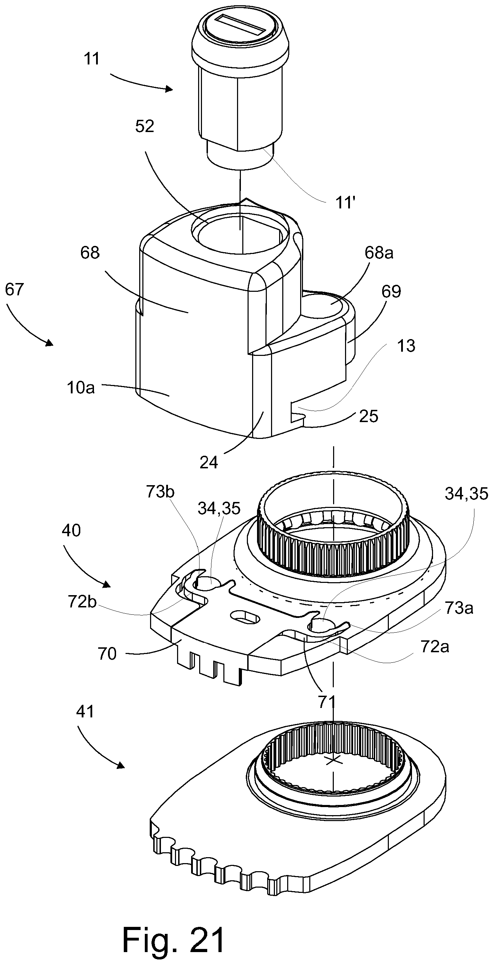

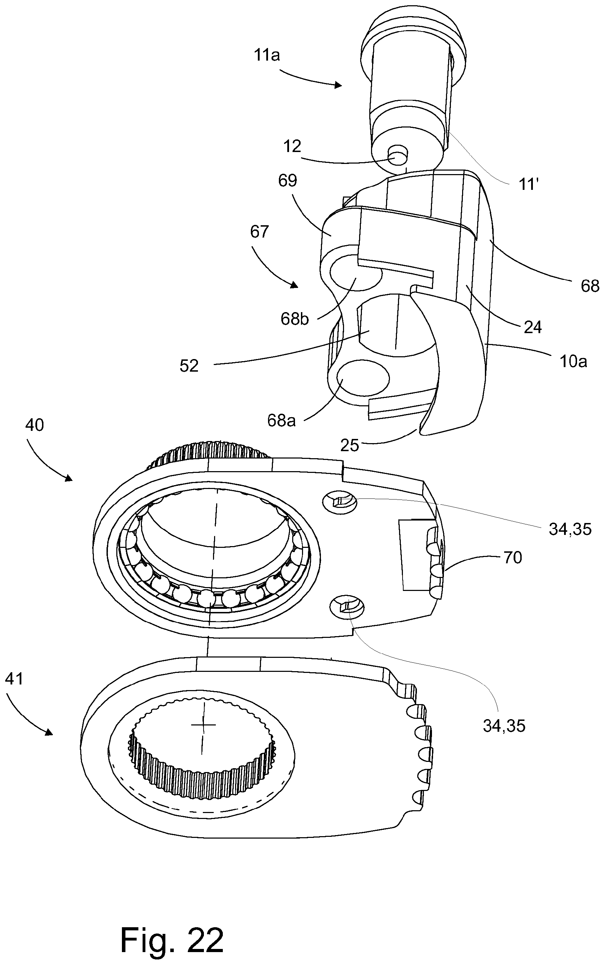

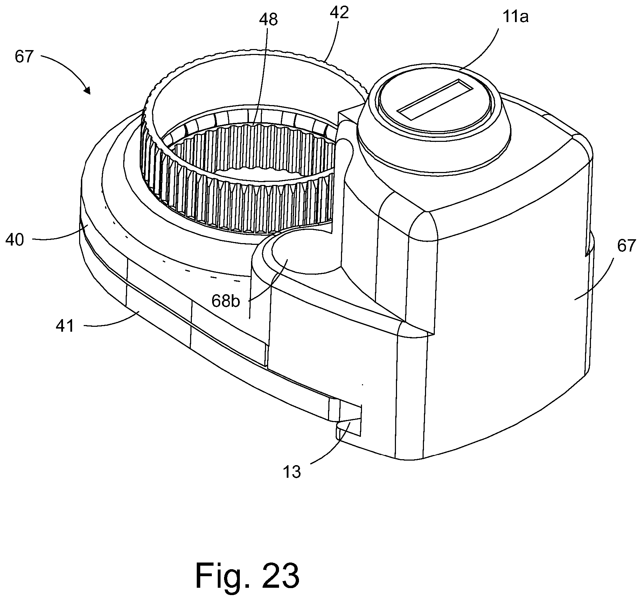

Fig. 21 is an exploded view of a modified locking arrangement t 67 seen from above and being adapted for use with a cable lock 28, as described in relation to figs. 13 and 14. Fig. 22 shows the same oblique from below, and fig. 23 shows the modified third embodiment 67 in assembled state.

The modified locking arrangement 67 corresponds, with only minor exceptions, to the locking arrangement 39, and for like parts same reference numeral are used. The modified locking arrangement67 is modified to also implement one or two cable locks 28 of the kind described above.

The modified locking arrangement 67 has a modified lock housing 68 wherein two through-going lock fittings bores 68a,68b are provided opposite each other through a lock fitting housing part 69 that radiate as a roof above the groove 13 from the main body 10b of the lock housing 10 above the L-shaped extension 10a to overlay the upper projection 14 of the upper locking plate part 40'''.

As can be seen in fig. 21 both the lock plate component 70 and the lock plate compartment 71 are also modified compared to same components of the third embodiment.

The modified lock plate component 70 has two radiating arms 72a,72b opposite the end stop 60. Each arms 72a,7b has a bifurcation 73a,73b. The modified lock plate compartment 71 is a recess of substantially complementary shape to the modified lock plate component 70 with the radiating bifurcated arms 72a,72b.

The first openings 34 are located through the bottom of the modified lock plate compartment 71 in at least partial alignment with the gaps of the bifurcations 73a,73b of the two radiating arms 72a,72b, which gaps defines the second openings 35 in order to receive a lock fitting 30 of a cable lock 28 as already described above. The modified lock plate component 70 slides in the modified lock plate compartment 71 between the first position and the second position similarly as described for the third embodiment and interlocking of teeth takes place in a manner already described for the third embodiment 39 and will not be repeated for the modification.

The sliding movement opens and closes the size of the first openings 34 and the second opening 35. The diameter of the first openings 34 and the second opening 35 of the modified third embodiment 67 are then adjustable by the sliding of the lock plate component 70, however the first openings 34 and second openings 35 function to receive the lock fitting in a similar manner as the previously described openings. It should be noted that the engaging pin does not pass through the lower mounting part 41, which lower mounting parts also guards the lock fitting.

The opposite first openings 34 and second openings 35 are provided at least partly aligned with the through-going lock fittings bores 68a,68b so that the circumferential groove 32 locks with the second opening 35 when the lock plate component is in the first locking position. The first opening allows easy entry of the engaging pin 32 whereas the second opening closes around the circumferential groove 32. So the cut-out section has an adjustable size corresponding to the position of the bifurcations.

The symmetrical design of the modified lock housing makes it possible to lock the locking arrangement irrespective of the front wheel has been turn clockwise or counter clock-wise by means of the handlebars away from the plane of the rear wheel(s) in the first position. Both lock fittings bores 68a,68b can even be equipped with a cable lock device.

The present inventions can be used, not only on bicycles or similar vehicles having a conventional visible mounting of the bearing of the front fork, but quite as well on similar vehicles having integral bearings or semi-integral bearings. Irrespective of which kind of bearing that are used the main function is to lock the bearing so at to make turning of the front wheel by means of the handlebars subject to overcoming a resistance provided against turning by fitting additional components to the bearing or making modifications to the already provided components of the bearings.

The lower mounting part extends below the locking pin and guard it so that is no longer possible to hit on the locking pin from below. Thus the new locking arrangements are much stronger than the old ones, and much more effort needs to be done to get unauthorised access to the vehicle.

## Claims

1. An anti-theft locking arrangement (7;7';39;64;67) for a vehicle (1) having at least two wheels, said locking arrangement (7;7';39; 64; 67) comprises,
- an upper mounting part (8;40) including an upper mounting plate (8';40') and a lock housing (10;68),
- the upper mounting plate includes
- an upper vehicle mounting component (8" ; 40") that serves for securing said upper mounting plate (8';40') to a head tube (6) of a frame (5) of the vehicle (1), which upper vehicle mounting component (8";40") has an upper through-hole (8a;40a), and
- an upper locking plate part (8''';40''') protruding from the upper vehicle mounting component (8';40'),
- the lock housing (10;68) has a bore (52) that accommodates a cylinder lock (11),
- a lower mounting part (9;41) including a lower mounting plate (9',41'), the lower mounting plate (9',41') includes
- a lower vehicle mounting component (9",41") that has a lower through-hole (9a;41a) for receiving a steerer tube (3a) of a front fork of the vehicle (1), which steerer tube (3a) defines an upright axle turnable arranged in the head tube (6) of the frame (5) of the vehicle (1), and
- a lower locking plate part (9''',41''') protruding from the lower vehicle mounting component (9",41"),
- the lower mounting part (9;41) turns together with the turnable steerer tube (3a) when the handlebars (2) is turned,
- a locking pin (12) is situated at a bottom face (11') of the cylinder lock (11) and being adapted to engage at least the upper mounting plate (8;40),
the upper through-hole (8a;40a) and the lower through-hole (9a;41a) are arranged co-axially so that the lower locking plate part (9''',41''') is arranged turnable subjacent the upper locking plate part (8''',40''') to form a guard below the locking pin (12), wherein
- the lock housing is solid with the upper mounting plate (40'),
and wherein
- locking and unlocking of the anti-theft locking arrangement (39;64;67) is achieved by the provision of a lock plate component (50;70) confined slidingly in a lock plate compartment (51;71) delimited between the upper locking plate part (40''') and the lock housing (10),
- the lock plate component (50) is actuable to slide between engagement and disengagement with at least a row of first teeth (22) of the lower mounting part (41) by means of an eccentrically placed locking pin (12) at the bottom face (11') of the cylinder lock (11) in response to turning the cylinder lock (11) in the lock housing (10;68), **characterized in that**
- a free compartment edge (65) of the lock plate compartment (71) has a row of third teeth (66) alignable for engaging a row of second teeth (61) of an end stop (60) of the lock plate component (50), and
- in the the parked position at least some of the teeth of the row of first teeth (22) and some of the teeth of the row of third teeth (66) are arranged in alignment to define a common gap having a combined height corresponding to the height of the aligned row of second teeth (61) to allow entry of and engagement with the row of second teeth (61) of the end stop (60) as an anti-rotation means.

2. An anti-theft locking arrangement (7;7') according to claim 1, **characterized in that** the lower mounting part (9;41) has adjusting means (17) that cooperates with the locking pin (12) of the cylinder lock (11) in such a way that the vehicle (1) is in a non-riding position when the locking pin (12) engages the adjusting means and in a riding position when the locking pin (12) does not engage the adjusting means (17).

3. An anti-theft locking arrangement (7;7';39;64;67) according to any of the claims 1 or 2, **characterized in that** the lock housing (10;68) comprises a lower part in form of a substantially L-shaped axial extension (10a) that defines a groove (13) for receiving at least a part of a protruding upper projection (14) at the front end of the upper locking plate part (8''';40''').

4. An anti-theft locking arrangement (7;7';39;64;67) according to claim 3, **characterized in that** the groove (13) of the substantially L-shaped axial extension (10a) receives at least a part of a protruding lower projection (15) at the front end of the lower locking plate part (9''';41''').

5. An anti-theft locking arrangement (7;7';39;64;67) according to claim 4, **characterized in that** the lower projection (15) has a curved edge.

6. An anti-theft locking arrangement (7;7';39;64;67) according to claim 5, **characterized in that** the centre of the curve of the edge of the lower projection (15) is situated on the axis of the upright axle (4) constituted by the steerer tube (3a) of the front fork (3) of the vehicle (1).

7. An anti-theft locking arrangement (7;7';39;64;67) according to any of the preceding claims 1 - 6, **characterized in that** a main part of the lower locking plate part (9''';41''') has an at least substantially uniform thickness.

8. An anti-theft locking arrangement (7;7';39;64;67) according to any of the preceding claims 1 - 7, **characterized in that** a main part of the upper locking plate part (8''';48''') has an at least substantially uniform thickness.

9. An anti-theft locking arrangement (7';39;64;67) according to any of the preceding claims 1 - 8, **characterized in that** the upper vehicle mounting component (8";40") of the upper mounting part (8;40) has an upper upright flange (42).

10. An anti-theft locking arrangement (7';39;64;67) according to any of the preceding claims 1 - 8, **characterized in that** the lower vehicle mounting component (9";41") of the lower mounting part (9;41) has a lower upright flange (48) having a smaller exterior diameter than the interior diameter of the upper upright flange (42).

11. An anti-theft locking arrangement (39;64;67) according to any of the preceding claims 1 - 9, **characterized in that** a ball bearing (45) is provided between the upper vehicle mounting component (40") and the lower vehicle mounting component (41").

12. An anti-theft locking arrangement (7;7';39;64;67) according to any of the preceding claims 1 - 10, **characterized in that** the vehicle is a two-wheeled bicycle (1).

13. An anti-theft locking arrangement (39; 64; 67) according to any of the preceding claims 1 - 11, **characterized in that** the lower mounting part (41) replaces at least a crown race of the vehicle (1) and the upper mounting part (40) replaces at least a lower head tube race (44) of the vehicle.

14. An anti-theft locking arrangement (39; 64; 67) according to any of the preceding claims 1 - 12, **characterized in that** the upper vehicle mounting component (40") has an exterior knurling (43).

15. An anti-theft locking arrangement (39; 64; 67) according to any of the preceding claims 1 - 13, **characterized in that** the lower vehicle mounting component (41") has an interior knurling (49).

16. An anti-theft locking arrangement (7;7';39;64;67) according to any of the preceding claims 1 - 14, **characterized in** further comprising a cable lock device (28) including a cable (29) having an end equipped with a lock fitting (30) and an opposite end equipped with a hole for allowing passing of the lock fitting (30), which lock fitting is adapted for being locked together with the upper mounting part (8).

## Patentansprüche

1. Diebstahlschutzverriegelungsanordnung (7; 7'; 39; 64; 67) für ein Fahrzeug (1) mit zumindest zwei Rädern, wobei die Verriegelungsanordnung (7; 7'; 39; 64; 67) umfasst:
- ein oberes Anbauteil (8; 40), das eine obere Anbauplatte (8'; 40') und ein Schlossgehäuse (10; 68) enthält,
- wobei die obere Anbauplatte enthält:
- eine obere Fahrzeuganbaukomponente (8''; 40''), die zum Befestigen der oberen Anbauplatte (8'; 40') an einem Steuerkopfrohr (6) eines Rahmens (5) des Fahrzeugs (1) dient, wobei die obere Fahrzeuganbaukomponente (8''; 40'') ein oberes Durchgangsloch (8a; 40a) aufweist, und
- ein oberes Verriegelungsplattenteil (8'''; 40'''), das von der oberen Fahrzeuganbaukomponente (8'; 40') vorsteht,
- wobei das Schlossgehäuse (10; 68) eine Bohrung (52) aufweist, die ein Zylinderschloss (11) aufnimmt,
- ein unteres Anbauteil (9; 41), das eine untere Anbauplatte (9', 41') enthält, wobei die untere Anbauplatte (9', 41') enthält:
- eine untere Fahrzeuganbaukomponente (9'', 41''), die ein unteres Durchgangsloch (9a; 41a) zum Aufnehmen eines Gabelschafts (3a) einer vorderen Gabel des Fahrzeugs (1) aufweist, wobei der Gabelschaft (3a) eine aufrechte Achse definiert, die drehbar im Steuerkopfrohr (6) des Rahmens (5) des Fahrzeugs (1) angeordnet ist, und
- ein unteres Verriegelungsplattenteil (9''', 41'''), das von der unteren Fahrzeuganbaukomponente (9", 41") vorsteht,
- wobei sich das untere Anbauteil (9; 41) zusammen mit dem drehbaren Gabelschaft (3a) dreht, wenn der Lenker (2) gedreht wird,
- wobei sich ein Verriegelungsstift (12) an einer Unterseitenfläche (11') des Zylinderschlosses (11) befindet und dazu geeignet ist, zumindest die obere Anbauplatte (8; 40) in Eingriff zu nehmen,
wobei das obere Durchgangsloch (8a; 40a) und das untere Durchgangsloch (9a; 41a) koaxial angeordnet sind, sodass das untere Verriegelungsplattenteil (9''', 41''') drehbar dem oberen Verriegelungsplattenteil (8''', 40''') unterliegend angeordnet ist, um einen Schutz unterhalb des Verriegelungsstifts (12) auszubilden, wobei
- das Schlossgehäuse mit der oberen Anbauplatte (40') einstückig ist,
und wobei
- Verriegeln und Entriegeln der Diebstahlschutzverriegelungsanordnung (39; 64; 67) durch Vorsehen einer Schlossplattenkomponente (50; 70) erzielt wird, die gleitbar in einer Schlossplattenabteilung (51; 71) eingegrenzt ist, welche zwischen dem oberen Verriegelungsplattenteil (40''') und dem Schlossgehäuse (10) abgegrenzt ist,
- wobei die Schlossplattenkomponente (50) zum Gleiten zwischen Ineingriffnahme mit und Ausrücken aus zumindest einer Reihe von ersten Zähnen (22) des unteren Anbauteils (41) mithilfe eines exzentrisch angeordneten Verriegelungsstifts (12) an der unteren Seitenfläche (11') des Zylinderschlosses (11) in Reaktion auf Drehen des Zylinderschlosses (11) im Schlossgehäuse (10; 68) betreibbar ist, **dadurch gekennzeichnet, dass**
- eine freie Abteilungskante (65) der Schlossplattenabteilung (71) eine Reihe von dritten Zähnen (66) aufweist, die zur Ineingriffnahme einer Reihe von zweiten Zähnen (61) eines Endanschlags (60) der Schlossplattenkomponente (50) ausrichtbar ist, und
- in der abgestellten Position zumindest einige der Zähne der Reihe von ersten Zähnen (22) und einige der Zähne der Reihe von dritten Zähnen (66) in Ausrichtung angeordnet sind, um einen gemeinsamen Spalt mit einer kombinierten Höhe zu definieren, welche der Höhe der ausgerichteten Reihe von zweiten Zähnen (61) entspricht, um Eintritt der und Ineingriffnahme mit der Reihe von zweiten Zähnen (61) des Endanschlags (60) als ein Drehschutzmittel zu ermöglichen.

2. Diebstahlschutzverriegelungsanordnung (7; 7') nach Anspruch 1, **dadurch gekennzeichnet, dass** das untere Anbauteil (9; 41) ein Anpassungsmittel (17) aufweist, das derart mit dem Verriegelungsstift (12) des Zylinderschlosses (11) zusammenwirkt, dass das Fahrzeug (1) in einer nichtfahrenden Position ist, wenn der Verriegelungsstift (12) das Anpassungsmittel in Eingriff nimmt, und in einer Fahrposition ist, wenn der Verriegelungsstift (12) das Anpassungsmittel (17) nicht in Eingriff nimmt.

3. Diebstahlschutzverriegelungsanordnung (7; 7'; 39; 64; 67) nach einem der Ansprüche 1 oder 2, **dadurch gekennzeichnet, dass** das Schlossgehäuse (10; 68) ein unteres Teil in der Form einer im Wesentlichen L-förmigen, axialen Erweiterung (10a) umfasst, die eine Nut (13) zum Aufnehmen von zumindest einem Teil eines vorstehenden oberen Vorsprungs (14) am vorderen Ende des oberen Verriegelungsplattenteils (8'''; 40''') definiert.

4. Diebstahlschutzverriegelungsanordnung (7; 7'; 39; 64; 67) nach Anspruch 3, **dadurch gekennzeichnet, dass** die Nut (13) der im Wesentlichen L-förmigen, axialen Erweiterung (10a) zumindest einen Teil eines vorstehenden unteren Vorsprungs (15) am vorderen Ende des unteren Verriegelungsplattenteils (9"'; 41"') aufnimmt.

5. Diebstahlschutzverriegelungsanordnung (7; 7'; 39; 64; 67) nach Anspruch 4, **dadurch gekennzeichnet, dass** der untere Vorsprung (15) eine gekrümmte Kante aufweist.

6. Diebstahlschutzverriegelungsanordnung (7; 7'; 39; 64; 67) nach Anspruch 5, **dadurch gekennzeichnet, dass** sich das Zentrum der Krümmung der Kante des unteren Vorsprungs (15) auf der Achse der aufrechten Achse (4) befindet, die durch den Gabelschaft (3a) der vorderen Gabel (3) des Fahrzeugs (1) gebildet ist.

7. Diebstahlschutzverriegelungsanordnung (7; 7'; 39; 64; 67) nach einem der vorhergehenden Ansprüche 1 bis 6, **dadurch gekennzeichnet, dass** ein Hauptteil des unteren Verriegelungsplattenteils (9'''; 41''') eine zumindest im Wesentlichen einheitliche Stärke aufweist.

8. Diebstahlschutzverriegelungsanordnung (7; 7'; 39; 64; 67) nach einem der vorhergehenden Ansprüche 1 bis 7, **dadurch gekennzeichnet, dass** ein Hauptteil des oberen Verriegelungsplattenteils (8''', 48''') eine zumindest im Wesentlichen einheitliche Stärke aufweist.

9. Diebstahlschutzverriegelungsanordnung (7'; 39; 64; 67) nach einem der vorhergehenden Ansprüche 1 bis 8, **dadurch gekennzeichnet, dass** die obere Fahrzeuganbaukomponente (8"; 40'') des oberen Anbauteils (8; 40) einen oberen aufrechten Flansch (42) aufweist.

10. Diebstahlschutzverriegelungsanordnung (7'; 39; 64; 67) nach einem der vorhergehenden Ansprüche 1 bis 8, **dadurch gekennzeichnet, dass** die untere Fahrzeuganbaukomponente (9''; 41'') des unteren Anbauteils (9; 41) einen unteren aufrechten Flansch (48) aufweist, der einen kleineren Außendurchmesser als der Innendurchmesser des oberen aufrechten Flanschs (42) aufweist.

11. Diebstahlschutzverriegelungsanordnung (39; 64; 67) nach einem der vorhergehenden Ansprüche 1 bis 9, **dadurch gekennzeichnet, dass** ein Kugellager (45) zwischen der oberen Fahrzeuganbaukomponente (40'') und der unteren Fahrzeuganbaukomponente (41") vorgesehen ist.

12. Diebstahlschutzverriegelungsanordnung (7; 7'; 39; 64; 67) nach einem der vorhergehenden Ansprüche 1 bis 10, **dadurch gekennzeichnet, dass** das Fahrzeug ein zweirädriges Fahrrad (1) ist.

13. Diebstahlschutzverriegelungsanordnung (39; 64; 67) nach einem der vorhergehenden Ansprüche 1 bis 11, **dadurch gekennzeichnet, dass** das untere Anbauteil (41) zumindest einen Gabelkonus des Fahrzeugs (1) ersetzt und das obere Anbauteil (40) zumindest einen unteren Steuerkopfrohrkonus (44) des Fahrzeugs ersetzt.

14. Diebstahlschutzverriegelungsanordnung (39; 64; 67) nach einem der vorhergehenden Ansprüche 1 bis 12, **dadurch gekennzeichnet, dass** die obere Fahrzeuganbaukomponente (40'') eine Außenrändelung (43) aufweist.

15. Diebstahlschutzverriegelungsanordnung (39; 64; 67) nach einem der vorhergehenden Ansprüche 1 bis 13, **dadurch gekennzeichnet, dass** die untere Fahrzeuganbaukomponente (41'') eine Innenrändelung (49) aufweist.

16. Diebstahlschutzverriegelungsanordnung (7; 7'; 39; 64; 67) nach einem der vorhergehenden Ansprüche 1 bis 14, **dadurch gekennzeichnet, dass** sie ferner eine Kabelschlossvorrichtung (28) umfasst, die ein Kabel (29) enthält, welches ein Ende, das mit einem Schlossbeschlag (30) ausgestattet ist, und ein gegenüberliegendes Ende aufweist, das mit einem Loch zum Ermöglichen des Durchführens des Schlossbeschlags (30) ausgestattet ist, wobei der Schlossbeschlag dazu geeignet ist, mit dem oberen Anbauteil (8) zusammengeschlossen zu werden.

## Revendications

1. Mécanisme de verrouillage anti-effraction (7 ; 7' ; 39 ; 64 ; 67) destiné à un véhicule (1) qui possède au moins deux roues, ledit mécanisme de verrouillage (7 ; 7' ; 39 ; 64 ; 67) comprenant :
- un élément de montage supérieur (8 ; 40) qui englobe une plaque de montage supérieure (8' ; 40') et un boîtier de verrouillage (10 ; 68) ;
- la plaque de montage supérieure englobant :
- un composant de montage supérieur (8" ; 40") destiné à un véhicule, qui sert à fixer ladite plaque de montage supérieure (8' ; 40') à un tube de direction (6) d'un cadre (5) du véhicule (1), ledit composant de montage supérieur (8" ; 40") destiné à un véhicule possédant un trou de passage supérieur (8a ; 40a) ; et
- un élément supérieur faisant office de plaque de verrouillage (8"' ; 40"') qui fait saillie par rapport au composant de montage supérieur (8" ; 40") destiné à un véhicule ;
- le boîtier de verrouillage (10 ; 68) possédant un alésage (52) dans lequel vient se loger un cylindre à barillet (11) ;
- un élément de montage inférieur (9; 41) qui englobe une plaque de montage inférieure (9' ; 41'), la plaque de montage inférieure (9' ; 41') englobant :
- un composant de montage inférieur (9" ; 41") destiné à un véhicule, qui possède un trou de passage inférieur (9a ; 41a) destiné à la réception d'une tige de fourche (3a) d'une fourche avant du véhicule (1), ladite tige de fourche (3a) définissant un axe vertical monté en rotation dans le tube de direction (6) du cadre (5) du véhicule (1) ; et
- un élément inférieur faisant office de plaque de verrouillage (9'"; 41'") qui fait saillie par rapport au composant de montage inférieur (9" ; 41") destiné à un véhicule ;
- l'élément de montage inférieur (9; 41) tourne de manière conjointe avec la tige de fourche rotative (3a) lorsqu'on fait tourner le guidon (2) ;
- une goupille de verrouillage (12) est disposée sur une face inférieure (11') du cylindre à barillet (11) et est conçue pour entrer en contact avec au moins la plaque de montage supérieure (8 ; 40) ;
- le trou de passage supérieur (8a ; 40a) et le trou de passage inférieur (9a; 41a) sont disposés en position coaxiale d'une manière telle que l'élément inférieur faisant office de plaque de verrouillage (9"' ; 41'") est monté en rotation en position sous-jacente à l'élément supérieur faisant office de plaque de verrouillage (8"' ; 40"') pour faire office de protection en dessous de la goupille de verrouillage (12) ; dans lequel
- le boîtier de verrouillage est réalisé en une seule pièce avec la plaque de montage supérieure (40') ;
et dans lequel
- le verrouillage et le déverrouillage du mécanisme de verrouillage anti-effraction (39 ; 64 ; 67) sont mis en œuvre par le fait de procurer un composant (50 ; 70) faisant office de plaque de verrouillage qui est confiné par glissement dans un compartiment (51 ; 71) de plaque de verrouillage, qui est délimité entre l'élément supérieur faisant office de plaque de verrouillage (40"') et le boîtier de verrouillage (10) ;
- le composant (50) faisant office de plaque de verrouillage peut être actionné pour passer par glissement d'un engrènement à un désengrènement, et vice-versa, avec et par rapport à au moins une rangée de premières dents (22) de l'élément de montage inférieur (41) au moyen d'une goupille de verrouillage (12) montée en position excentrique sur la face inférieure (11') du cylindre à barillet (11), en réponse à une rotation du cylindre à barillet (11) dans le boîtier de verrouillage (10 ; 68) ;
**caractérisé en ce que**
- un bord de compartiment libre (65) du compartiment (71) de la plaque de verrouillage possède une rangée de troisièmes dents (66) qui peuvent venir se mettre en alignement à des fins d'engrènement avec une rangée de deuxièmes dents (61) d'un arrêt terminal (60) du composant (50) faisant office de plaque de verrouillage ; et
- dans la position parquée, au moins un certain nombre des dents de la rangée de premières dents (22) et un certain nombre des dents de la rangée de troisièmes dents (66) sont mises en alignement afin de définir un espace libre commun possédant une hauteur combinée qui correspond à la hauteur de la rangée de deuxièmes dents (61) qui a été mise en alignement pour permettre l'entrée de la rangée de deuxièmes dents (61), et l'engrènement avec la rangée en question, de l'arrêt terminal (60), pour faire office de moyen antirotation.

2. Mécanisme de verrouillage anti-effraction (7 ; 7') selon la revendication 1, **caractérisé en ce que** l'élément de montage inférieur (9 ; 41) possède un moyen de réglage (17) qui coopère avec la goupille de verrouillage (12) du cylindre à barillet (11) d'une manière telle que le véhicule (1) se trouve dans une position de non déplacement lorsque la goupille de verrouillage (12) vient s'engrener avec le moyen de réglage et dans une position de déplacement lorsque la goupille de verrouillage (12) ne vient pas s'engrener avec le moyen de réglage (17).

3. Mécanisme de verrouillage anti-effraction (7 ; 7' ; 39 ; 64 ; 67) selon l'une quelconque des revendications 1 ou 2, **caractérisé en ce que** le boîtier de verrouillage (10 ; 68) comprend une partie inférieure sous la forme d'un prolongement axial (10a) qui possède essentiellement une configuration en forme de L, qui définit une rainure (13) pour la réception d'au moins une partie d'une protubérance supérieure (14) faisant saillie à l'extrémité avant de l'élément supérieur faisant office de plaque de verrouillage (8"' ; 40"').

4. Mécanisme de verrouillage anti-effraction (7 ; 7' ; 39 ; 64 ; 67) selon la revendication 3, **caractérisé en ce que** la rainure (13) du prolongement axial (10a) qui possède essentiellement une configuration en forme de L reçoit au moins une partie d'une protubérance inférieure (15) faisant saillie à l'extrémité avant de l'élément inférieur faisant office de plaque de verrouillage (9"' ; 41'").

5. Mécanisme de verrouillage anti-effraction (7 ; 7' ; 39 ; 64 ; 67) selon la revendication 4, **caractérisé en ce que** la protubérance inférieure (15) possède un bord de forme courbe.

6. Mécanisme de verrouillage anti-effraction (7 ; 7' ; 39 ; 64 ; 67) selon la revendication 5, **caractérisé en ce que** le centre de la courbe du bord de la protubérance inférieure (15) est situé sur l'axe de l'axe vertical (4) qui est constitué par la tige de fourche (3a) de la fourche avant (3) du véhicule (1).

7. Mécanisme de verrouillage anti-effraction (7 ; 7' ; 39 ; 64 ; 67) selon l'une quelconque des revendications précédentes 1 à 6, **caractérisé en ce qu'**une partie principale de l'élément inférieur faisant office de plaque de verrouillage (9'"; 41'") possède une épaisseur uniforme au moins à titre essentiel.

8. Mécanisme de verrouillage anti-effraction (7 ; 7' ; 39 ; 64 ; 67) selon l'une quelconque des revendications précédentes 1 à 7, **caractérisé en ce qu'**une partie principale de l'élément supérieur faisant office de plaque de verrouillage (8"' ; 48"') possède une épaisseur uniforme au moins à titre essentiel.

9. Mécanisme de verrouillage anti-effraction (7' ; 39 ; 64 ; 67) selon l'une quelconque des revendications précédentes 1 à 8, **caractérisé en ce que** le composant de montage supérieur (8" ; 40") destiné à un véhicule, de l'élément de montage supérieur (8 ; 40) possède une bride verticale supérieure (42).

10. Mécanisme de verrouillage anti-effraction (7' ; 39 ; 64 ; 67) selon l'une quelconque des revendications précédentes 1 à 8, **caractérisé en ce que** le composant de montage inférieur (9" ; 41 ") destiné à un véhicule, de l'élément de montage inférieur (9 ; 41 ) possède une bride verticale inférieure (48) dont le diamètre extérieur est inférieur au diamètre intérieur de la bride verticale supérieure (42).

11. Mécanisme de verrouillage anti-effraction (39 ; 64 ; 67) selon l'une quelconque des revendications précédentes 1 à 9, **caractérisé en ce que** l'on prévoit un roulement à billes (45) entre le composant de montage supérieur (40") destiné à un véhicule et le composant de montage inférieur (41") destiné à un véhicule.

12. Mécanisme de verrouillage anti-effraction (7 ; 7' ; 39 ; 64 ; 67) selon l'une quelconque des revendications précédentes 1 à 10, **caractérisé en ce que** le véhicule est une bicyclette à deux roues (1).

13. Mécanisme de verrouillage anti-effraction (39; 64; 67) selon l'une quelconque des revendications précédentes 1 à 11, **caractérisé en ce que** l'élément de montage inférieur (41) remplace au moins une bague supérieure du véhicule (1) et l'élément de montage supérieur (40) remplace au moins une bague inférieure du tube de direction (44) du véhicule.

14. Mécanisme de verrouillage anti-effraction (39; 64; 67) selon l'une quelconque des revendications précédentes 1 à 12, **caractérisé en ce que** le composant de montage supérieur (40") destiné à un véhicule possède un moletage extérieur (43).

15. Mécanisme de verrouillage anti-effraction (39; 64; 67) selon l'une quelconque des revendications précédentes 1 à 13, **caractérisé en ce que** le composant de montage inférieur (41") destiné à un véhicule possède un moletage intérieur (49).

16. Mécanisme de verrouillage anti-effraction (7 ; 7' ; 39 ; 64 ; 67) selon l'une quelconque des revendications précédentes 1 à 14, **caractérisé en ce qu'**il comprend en outre un dispositif de verrouillage de câble (28) qui englobe un câble (29) qui possède une extrémité qui est équipée d'un accessoire de verrouillage (30) et une extrémité opposée dans laquelle est pratiqué un trou pour permettre le passage de l'accessoire de verrouillage (30), ledit accessoire de verrouillage étant conçu pour être verrouillé de manière conjointe avec l'élément de montage supérieur (8) destiné à un véhicule.
